# EUROPÄISCHE PATENTSCHRIFT

(11) **EP 4 677 717 B1**
(45) Veröffentlichungstag und Bekanntmachung des Hinweises auf die Patenterteilung: **18.02.2026**
(21) Anmeldenummer: 24718771.9
(22) Anmeldetag: 10.04.2024
(51) Int. Cl.: H02J 50/00, H02J 50/40, H02K 41/03, B65G 54/02

(54) **PLANARANTRIEBSSYSTEM, LÄUFER FÜR EIN PLANARANTRIEBSSYSTEM UND VERFAHREN ZUR ENERGIEÜBERTRAGUNG**
PLANAR DRIVE SYSTEM, ROTOR FOR A PLANAR DRIVE SYSTEM AND METHOD FOR TRANSMITTING ENERGY
SYSTÈME D'ENTRAÎNEMENT PLAN, ROTOR POUR UN SYSTÈME D'ENTRAÎNEMENT PLAN ET PROCÉDÉ DE TRANSMISSION D'ÉNERGIE

(30) Priorität: 12.04.2023 DE 102023109179
(43) Veröffentlichungstag der Anmeldung: 14.01.2026
(73) Patentinhaber: Beckhoff Automation GmbH, 33415 Verl (DE)
(72) Erfinder: BECKHOFF, Johannes, 33758 Schloß Holte-Stukenbrock (DE); SCHULTE, Felix, 33397 Rietberg (DE); BENTFELD, Lukas, 33129 Delbrück (DE); PRÜSSMEIER, Uwe, 32657 Lemgo (DE)
(74) Vertreter: Patentanwaltskanzlei WILHELM & BECK
(86) Internationale Anmeldenummer: PCT/EP2024/059689
(87) Internationale Veröffentlichungsnummer: WO 2024/213570

(56) Entgegenhaltungen:
- WO-A1-2023/053563

## Beschreibung

Die Erfindung betrifft ein Planarantriebssystem. Die Erfindung betrifft ferner einen Läufer für ein Planarantriebssystem. Die Erfindung betrifft darüber hinaus ein Verfahren zur Energieübertragung auf einen Läufereines Planarantriebssystems.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass bestromte Spulengruppen der Statoreinheit mit Antriebsmagneten mehrerer Magnetanordnungen des Läufers magnetisch wechselwirken.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Die planare Statoreinheit umfasst bestrombare erste Spulengruppen, welche mit den Magneten der ersten Magneteinheit magnetisch wechselwirken, um den Läufer in die erste Richtung anzutreiben, sowie bestrombare zweite Spulengruppen, welche mit den Magneten der zweiten Magneteinheit magnetisch wechselwirken, um den Läufer in die zweite Richtung anzutreiben. Die ersten und zweiten Spulengruppen sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden. Ein entsprechend ausgebildetes Planarantriebssystem ist beispielsweise aus der DE 10 2017 131 304 A1 bekannt.

Läufer derartiger Planarantriebssysteme sind primär für den Transport von Objekten innerhalb eines Automatisierungsprozesses ausgelegt. Neben dem Ausführen von Transportaufgaben können Läufer aber auch zum Ausführen von Teilprozessen des Automatisierungsprozesses, die über das reine Transportieren von Objekten hinausgehen, ausgerichtet sein. Hierzu können derartige Läufer mit entsprechenden Prozessvorrichtung versehen sein, die eingerichtet sind, die jeweiligen Teilprozesse auszuführen. Diese können beispielsweise Fertigungsprozesse, Verarbeitungsprozesse, Sortierprozesse oder ähnliche Prozesse sein, in denen die zu transportierenden Objekte entsprechend behandelt werden. Ein Betrieb dieser Prozessvorrichtungen auf den Läufern setzt eine ausreichende Energieversorgung voraus. Es besteht somit die Problematik, während des Betriebs des Planarantriebssystems und gegebenenfalls während des Verfahrens der Läufer, eine Energieversorgung der auf den Läufern angeordneten Prozessvorrichtungen gewährleisten zu können.

WO 2023/053563 A1 offenbart:

Planarantriebssystem , wobei das Planarantriebssystem eine Statoreinheit mit einer Mehrzahl von Spulengruppen zum Erzeugen eines Statormagnetfelds und wenigstens einen Läufer mit einer Mehrzahl von Magneteinheiten zum Erzeugen eines Läufermagnetfelds umfasst, wobei über eine magnetische Kopplung zwischen dem Statormagnetfeld und dem Läufermagnetfeld der Läufer antreibbar ist, wobei der Läufer einen Energiespeicher aufweist, wobei an der Statoreinheit eine Energieübertragungsstruktur mit einer Übertragungseinheit ausgebildet ist, wobei der Läufer eine mit der Übertragungseinheit koppelbare Übertragungsgegeneinheit umfasst, und wobei bei Kopplung der Übertragungseinheit mit der Übertragungsgegeneinheit eine Energieübertragung von der Energieübertragungsstruktur auf den Läufer bewirkbar ist.

Es ist daher eine Aufgabe der Erfindung, ein verbessertes Planarantriebssystem, einen verbesserten Läufer für ein Planarantriebssystem und ein verbessertes Verfahren zur Energieübertragung auf einen Läufer eines Planarantriebssystems bereitzustellen.

Die Aufgabe wird durch das Planarantriebssystem, den Läufer und das Verfahren der unabhängigen Ansprüche 1, 10, 11 gelöst. Bevorzugte Ausführungsformen sind in den abhängigen Ansprüchen angegeben.

Nach einem Aspekt der Erfindung wird ein Planarantriebssystem nach Anspruch 1 bereitgestellt, wobei das Planarantriebssystem eine Statoreinheit mit einer Mehrzahl von Spulengruppen zum Erzeugen eines Statormagnetfelds und wenigstens einen Läufer mit einer Mehrzahl von Magneteinheiten zum Erzeugen eines Läufermagnetfelds umfasst, wobei über eine magnetische Kopplung zwischen dem Statormagnetfeld und dem Läufermagnetfeld der Läufer auf der Statoreinheit antreibbar ist, wobei der Läufer einen Energiespeicher aufweist, wobei an der Statoreinheit eine Energieübertragungsstruktur mit einer Übertragungseinheit ausgebildet ist, wobei der Läufer eine mit der Übertragungseinheit koppelbare Übertragungsgegeneinheit umfasst, und wobei bei Kopplung der Übertragungseinheit mit der Übertragungsgegeneinheit eine Energieübertragung von der Energieübertragungsstruktur auf den Läufer bewirkbar ist.

Hierdurch kann der technische Vorteil erreicht werden, dass ein verbessertes Planarantriebssystem bereitgestellt werden kann. Hierzu umfasst das Planarantriebssystem wenigstens einen Läufer mit einem Energiespeicher. Ferner umfasst das Planarantriebssystem eine an der Statoreinheit ausgebildete Energieübertragungsstruktur. Über eine Kopplung einer Übertragungseinheit der Energieübertragungsstruktur mit einer Übertragungsgegeneinheit des Läufers ist eine Energieübertragung von der Energieübertragungsstruktur ermöglicht, wodurch der Energiespeicher aufladbar bzw. befüllbar ist. Dies ermöglicht, dass der Läufer mit Energiespeicher zu jeder Zeit mit Energie aufgeladen bzw. befüllt ist und somit eine für interne oder externe Anwendungen erforderliche Energie zur Verfügung steht.

Nach einer Ausführungsform weist die Energieübertragungsstruktur einen Kontaktierungsarm auf, wobei die Übertragungseinheit am Kontaktierungsarm ausgebildet ist, und wobei der Kontaktierungsarm wenigstens teilweise über einer Statoroberfläche der Statoreinheit angeordnet ist.

Hierdurch kann der technische Vorteil erreicht werden, dass eine einfache Energieübertragung von der Energieübertragungsstruktur auf den Läufer mit Energiespeicher ermöglicht ist. Indem der Kontaktierungsarm der Energieübertragungsstruktur wenigstens teilweise über der Statoroberfläche der Statoreinheit angeordnet ist, kann der Läufer zur Energieübertragung problemlos in eine entsprechende Energieübertragungsposition verfahren werden. Eine Kopplung der entsprechenden Übertragungseinheiten bzw. Übertragungsgegeneinheiten der Energieübertragungsstruktur bzw. des Läufers kann somit ausschließlich durch das Ansteuern des Läufers in die entsprechende Energieübertragungsposition erreicht werden.

Der Läufer bleibt somit während des Aufladevorgangs auf der Statoreinheit positioniert und kann somit zu jeder Zeit angesteuert und zu anderen Positionen auf der Statoreinheit verfahren werden. Ein Auswechseln des Energiespeichers bzw. des gesamten Läufers zum Aufladen des Energiespeichers ist somit nicht notwendig. Indem der Läufer ständig auf der Statoreinheit positioniert bleibt, kann der Aufladevorgang jederzeit unterbrochen werden, beispielsweise wenn zu einem gegebenen Zeitpunkt eine dringende Energieübertragung auf einen weiteren Läufer notwendig ist. Hierdurch kann der Transportprozess der zu transportierenden Objekte weiter optimiert werden.

Nach einer Ausführungsform ist die Übertragungsgegeneinheit seitlich und/oder an einer der Statoroberfläche zugewandten Unterseite und/oder an einer der Unterseite gegenüberliegenden Oberseite ausgebildet.

Hierdurch kann der technische Vorteil erreicht werden, dass durch die Ausbildung der Übertragungsgegeneinheit am Läufer eine möglichst einfache Aufladung des Energiespeichers an der Energieübertragungsstruktur ermöglicht ist. Indem die Übertragungsgegeneinheiten seitlich oder unterhalb des Läufers ausgebildet sind, kann eine einfache Kopplung mit der Übertragungseinheit der Energieübertragungsstruktur durch ein Positionieren des Läufers in der jeweils vorgesehenen Energieübertragungsposition bewirkt werden. Die Kopplung des Läufers mit der Energieübertragungsstruktur über die entsprechenden Übertragungseinheiten kann somit ausschließlich durch das Ansteuern des Läufers bewirkt werden. Zusätzliche bewegliche Mechanismen zur Kopplung des Läufers mit der Energieübertragungsstruktur können somit vermieden werden.

Nach einer Ausführungsform sind die Übertragungseinheit und die Übertragungsgegeneinheit als Induktionsspulen ausgebildet.

Hierdurch kann der technische Vorteil erreicht werden, dass über die als Induktionsspulen ausgebildeten Übertragungseinheiten bzw. Übertragungsgegeneinheiten der Energieübertragungsstruktur bzw. des Läufers eine berührungslose Energieübertragung ermöglicht ist. Dies vereinfacht wiederum die Kopplung des Läufers mit der Energieübertragungsstruktur, indem der Läufer lediglich in die vordefinierte Energieübertragungsposition verfahren werden muss, in der eine Energieübertragung zwischen den Induktionsspulen ermöglicht ist.

Indem die Energieübertragung kontaktlos erfolgt, ist die Steuerung bzw. Positionierung des Läufers in die Energieübertragungsposition vereinfacht, da die kontaktlose Kopplung zwischen den Induktionsspulen eine höhere Fehlertoleranz in der Positionierung der Übertragungseinheiten bzw. Übertragungsgegeneinheiten zueinander erlaubt.

Nach einer Ausführungsform sind die Übertragungseinheit und die Übertragungsgegeneinheit jeweils als eine Induktionsschicht ausgebildet, wobei die Übertragungseinheit an der Statoroberfläche der Statoreinheit angeordnet ist, und wobei die Übertragungsgegeneinheit an einer der Statoroberfläche zugewandten Unterseite des Läufers ausgebildet ist.

Hierdurch kann der technische Vorteil erreicht werden, dass eine weitere Vereinfachung der Kopplung des Läufers mit der Energieübertragungsstruktur zur Energieübertragung ermöglicht ist. Die Energieübertragungsposition, in der eine Kopplung zwischen den Übertragungseinheiten bzw. Übertragungsgegeneinheiten ermöglicht ist, ist hierbei durch die Ausbildung der Übertragungseinheit bzw. Übertragungsgegeneinheit als Induktionsschichten durch die gesamte Fläche der als Induktionsschicht ausgebildeten Übertragungseinheit gegeben.

Die Induktionsschicht der Übertragungseinheit ist hierbei auf der Statoroberfläche der Statoreinheit angeordnet. Der Läufer muss zur Energieübertragung lediglich auf die Fläche der als Induktionsschicht ausgebildeten Übertragungseinheit manövriert werden. Durch die Ausbildung der Induktionsschicht der Übertragungsgegeneinheit an der Unterseite des Läufers kann somit durch Positionierung des Läufers auf der Fläche der Übertragungseinheit unmittelbar eine Energieübertragung erreicht werden. Bei einer flächigen Ausbildung der Übertragungseinheit als Induktionsschicht, beispielsweise auf der gesamten Statoroberfläche der Statoreinheit, kann die Energieübertragung von der Energieübertragungsstruktur auf den Läufer auch bei einem Fahren des Läufers ermöglicht werden.

Der Läufer kann somit während des Fahrens auf der Statoreinheit , beispielsweise während des Fahrens zu einem weiteren Läufer, mit der benötigten Energiemenge durch die Energieübertragungsstruktur versorgt werden. Hierdurch kann der Transportprozess weiter optimiert werden, da zusätzliche Verzögerungen reduziert bzw. vermieden werden können.

Nach einer Ausführungsform umfasst die Übertragungseinheit eine Stromschiene, wobei die Übertragungsgegeneinheit einen Schleifkontakt umfasst.

Hierdurch kann der technische Vorteil erreicht werden, dass wiederum eine vereinfachte Energieübertragung von der Energieübertragungsstruktur auf den Läufer ermöglicht ist. Hierzu ist die Übertragungseinheit der Energieübertragungsstruktur als eine Stromschiene ausgebildet, während die Übertragungsgegeneinheit des Läufers als ein Schleifkontakt ausgebildet ist.

Der Läufer kann somit zur Energieübertragung derart an der Stromschiene entlang fahren, dass eine Kontaktierung der Stromschiene durch den Schleifkontakt erfolgt, und somit über den Schleifkontakt während des Fahrens die benötigte Energiemenge abgreifen.

Der Schleifkontakt bzw. die Stromschiene ermöglichen hierbei zusätzlich eine robuste und zuverlässige Option für eine Energieübertragung.

Nach einer Ausführungsform ist die Stromschiene in einer Statoroberfläche der Statoreinheit ausgebildet, wobei der Schleifkontakt an einer der Statoroberfläche zugewandten Unterseite des Läufers ausgebildet ist.

Hierdurch kann der technische Vorteil erreicht werden, dass durch das Ausbilden der Stromschiene an der Statoroberfläche und des Schleifkontakts an der Unterseite des Läufers der Läufer lediglich über die Stromschiene hinweg fahren muss und automatisch, beispielsweise durch Absenken der Flughöhe des Läufers, eine Kontaktierung des Schleifkontakts mit der Stromschiene und damit verbunden ein Energieübertrag ermöglicht ist. Der Läufer muss somit nicht extra in eine dafür vorgesehene Energieübertragungsposition, beispielsweise am Rand der Statoreinheit, verfahren werden, wodurch weitere Zeitersparnisse innerhalb des Transportprozesses erreicht werden können.

Nach einer Ausführungsform umfasst die Stromschiene eine Mehrzahl von Kontaktierungselementen, wobei die Kontaktierungselement in vorbestimmten Abständen zueinander an der Statoreinheit angeordnet sind, wobei am Läufer eine Mehrzahl von zueinander beabstandeten Schleifkontakten ausgebildet ist, und wobei der vordefinierte Abstand derart definiert ist, dass in einer Mehrzahl von Positionen des Läufers auf der Statoreinheit eine Kontaktierung zwischen wenigstens einem Kontaktierungselement und einem Schleifkontakt bewirkbar ist.

Hierdurch kann der technische Vorteil erreicht werden, dass durch die Mehrzahl von Kontaktierungselementen der Stromschiene, die über einen flächigen Bereich der Statoroberfläche der Statoreinheit verteilt sind und derart zueinander beabstandet sind, dass in einer Mehrzahl von Positionen der Läufer über wenigstens einen Schleifkontakt eine Kontaktierung zu wenigstens einem Kontaktierungselement herstellen kann, ist erreicht, dass der Läufer in einer Vielzahl an Positionen auf der Statoreinheit von der Energieübertragungsstruktur mit einer entsprechenden Energiemenge versehen werden kann.

Indem der Läufer an einer Vielzahl von Positionen auf der Statoreinheit mit Energie aufgeladen werden kann, kann verhindert werden, dass der Läufer zunächst in eine dafür vorgesehene Energieübertragungsposition verfahren werden muss. Dies bringt weitere Zeitersparnisse innerhalb des Transportprozesses. Die Kontaktierungselemente und der Schleifkontakt können hierbei jeweils einen + Pol und einen - Pol umfassen. Alternativ können die Kontaktierungselemente jeweils einen + Pol oder einen - Pol umfassen. Falls die Kontaktierungselemente jeweils nur einen + Pol oder einen - Pol umfassen, so können die Kontaktierungselemente derart zu einander beabstandet angeordnet sein, dass in einer beliebigen Position des Läufers auf der Statoreinheit der Läufer über einen Schleifkontakt jeweils wenigstens ein + Pol Kontaktierungselement und über einen weiteren Schleifkontakt wenigstens ein - Pol Kontaktierungselement kontaktiert.

Nach einer Ausführungsform ist über eine Variation einer Flughöhe des Läufers oberhalb der Statoroberfläche die Kopplung zwischen der Übertragungseinheit der Energieübertragungsstruktur und der Übertragungsgegeneinheit des Läufers bewirkbar.

Hierdurch kann der technische Vorteil erreicht werden, dass über die Variation der Flughöhe der Läufer die Kontaktierung mit der Energieübertragungsstruktur erreicht werden kann. Ein komplizierter Anschlussvorgang des Läufers an die Energieübertragungsstruktur kann somit vermieden werden. Durch ein Erhöhen der Flughöhe kann der Läufer jederzeit die Energieübertragung beenden. Dies ermöglicht einen reibungslosen und zeitsparenden Energieübertragsvorgang.

Erfindungsgemäss ist der Energiespeicher auf einer Oberfläche des Läufers angeordnet oder in eine Umrandungsstruktur des Läufers integriert oder flächig auf der Basisstruktur des Läufers ausgebildet und bildet die Oberfläche des Läufers.

Hierdurch kann der technische Vorteil erreicht werden, dass je nach Anwendung der Energiespeicher vorteilhaft am Läufer angeordnet werden kann. So kann beispielsweise bei einer gleichmäßigen Verteilung das Flugverhalten des Läufers verbessert werden.

Indem der Energiespeicher in einer nicht zur Erfindung gehörenden Variante ("Variante" im Folgenden) in die Läuferbasis des Läufers integriert ist, kann hingegen verhindert werden, dass eine nutzbare Ladefläche des Läufers durch den Energiespeicher verringert wird. Dies ermöglicht einen hohen Anwendungsbereich und erlaubt zusätzliche Funktionen des Läufers mit Energiespeicher, die über das Bereitstellen von Energie an weitere Läufer hinausgeht.

Nach einer Ausführungsform ist der Energiespeicher durch einen Fixierungsmechanismus am Läufer lösbar fixiert, wobei der Fixierungsmechanismus eine Rastverbindung und/oder Steckverbindung umfasst.

Hierdurch kann der technische Vorteil erreicht werden, dass durch den Fixierungsmechanismus der Energiespeicher sicher am Läufer angeordnet ist. Durch die lösbare Fixierung durch den Fixierungsmechanismus kann der Energiespeicher bei Bedarf ausgewechselt werden.

Nach einer Ausführungsform umfasst das Planarantriebssystem ferner eine an der Statoreinheit angeordnete Auslösestruktur, wobei die Auslösestruktur einen Aktivierungsvorsprung und einen Aufnahmebereich umfasst, wobei der Fixiermechanismus ein Auslöseelement umfasst, und wobei das Planarantriebssystem eingerichtet, durch Ansteuern des Läufers in eine Auswurfposition auf der Statoreinheit das Auslöseelement gegen den Aktivierungsvorsprung zu drücken und hierdurch auszulösen, wobei durch Auslösen des Auslöseelements der Energiespeicher aus dem Fixiermechanismus in den Aufnahmebereich der Auslösestruktur ausgeworfen wird.

Hierdurch kann der technische Vorteil erreicht werden, dass durch die an der Statoreinheit ausgebildete Auslösestruktur ein vereinfachtes Auswechseln des Energiespeichers des Läufers ermöglicht ist. Der Läufer muss hierbei lediglich in eine entsprechende Auslöseposition relativ zur Auslösestruktur positioniert werden. In der Auslöseposition wird durch einen Aktivierungsvorsprung der Auslösestruktur ein Auslöseelement des Fixiermechanismus aktiviert, worauf folgend der Energiespeicher automatisch aus dem Fixiermechanismus in einen dafür vorgesehenen Aufnahmebereich der Auslösestruktur ausgeworfen wird. Zusätzliche bewegliche bzw. ansteuerbare Elemente der Auslösestruktur, mit denen der Energiespeicher vom Läufer entfernt werden kann, sind somit zum Entfernen des Energiespeichers vom Läufer nicht nötig. Das Entfernen des Energiespeichers vom Läufer kann somit ausschließlich durch das Ansteuern des Läufers in die dafür vorgesehene Auslöseposition erreicht werden.

Nach einer Ausführungsform umfasst der Läufer und/oder der weitere Läufer eine Prozessvorrichtung, wobei über die Energie des Energiespeichers die Prozessvorrichtung antreibbar ist.

Hierdurch kann der technische Vorteil erreicht werden, dass durch einen Betrieb der Prozessvorrichtung der Läufer während des Transports der zu transportierenden Objekte entsprechende Prozesse ausführen kann. Der Transportvorgang der zu transportierenden Objekte kann hierdurch weiter optimiert werden.

Nach einer Ausführungsform umfasst der Energiespeicher eine elektrische Batterieeinheit und/oder einen Drucklufttank und/oder einen Unterdrucktank und/oder einen Gastank und/oder einen Kraftstofftank.

Hierdurch kann der technische Vorteil erreicht werden, dass verschiedene Energiearten zum Betreiben der Prozessvorrichtungen durch den Energiespeicher des Läufers bereitgestellt werden können. Hierdurch können verschiedene Prozessvorrichtungen und unterschiedliche Prozesse auf den Läufern ausgeführt werden.

Nach einer Ausführungsform umfasst der Läufer ein mit dem Energiespeicher verbundenes Energieübertragungselement, wobei das Energieübertragungselement mit einem Energieübertragungsgegenelement eines weiteren Läufers koppelbar ist, und wobei bei Kopplung des Energieübertragungselements mit dem Energieübertragungsgegenelement eine Energieübertragung vom Läufer auf den weiteren Läufer bewirkbar ist.

Hierdurch kann der technische Vorteil erreicht werden, dass über den Läufer und die im Energiespeicher gespeicherte Energie einem weiteren Läufer des Planarantriebssystems bereitgestellt werden kann. Somit ist eine Energieübertragung zwischen Läufern des Planarantriebssystems möglich. Wenigstens einer der Läufer muss hierzu mit einem entsprechenden Energiespeicher ausgebildet sein.

Die Läufer können beispielsweise Prozessvorrichtungen aufweisen, die auf den jeweiligen Läufern installiert sind und ausgeführt werden können. Die Ausführung der Prozessvorrichtungen kann beispielsweise während des Verfahrens der Läufer bzw. des Transportierens von Gegenständen durch die Läufer bewirkt werden. Die Ausführung der Prozessvorrichtungen ermöglicht eine Ausführung entsprechender Prozesse auf dem Läufer, wie das Fertigen, Verarbeiten bzw. Bearbeiten von zu transportierenden Objekten.

Die Energie kann von den Läufern auch an eine nicht auf einem Läufer positionierte Prozessvorrichtung transferiert werden.

Die durch die Prozessvorrichtungen ausgeführten Prozesse können beispielsweise das Temperieren von zu transportierenden Objekten, das Mischen bzw. Entmischen oder das Sortieren bzw. Ergreifen von Objekten umfassen, die während des Transportierens der jeweiligen Objekte durch den Läufer ausgeführt werden können.

Durch den mit dem Energiespeicher ausgebildeten Läufer können somit Läufer mit Prozessvorrichtungen in beliebigen Positionen auf der Statoreinheit mit entsprechender Energie zum Ausführen der Prozessvorrichtungen versorgt werden, wenn die jeweiligen Läufer zum Betrieben der Prozessvorrichtung entsprechend Energie benötigen.

Die Energieübertragung vom Energiespeicher des Läufers auf den jeweils weiteren Läufer kann beispielsweise während des Verfahrens der beiden Läufer ausgeführt werden. Der mit dem Energiespeicher ausgerüstete Läufer kann somit als sogenannter Tankläufer verwendet werden, der zu den jeweiligen Läufern gesteuert wird, die zum Ausführen der jeweiligen Prozessvorrichtungen eine entsprechende Energiemenge benötigen. Durch den Tankläufer kann somit vermieden werden, dass zur Energieübertragung die jeweiligen Läufer an dafür vorgesehene Tankpositionen bzw. Energieübertragungspositionen gesteuert werden müssen, wodurch der Transportvorgang der jeweils zu transportierenden Objekte unnötig verzögert werden würde.

Stattdessen kann während des Transportierens der zu transportierenden Objekte durch die Läufer der Tankläufer mit dem jeweils weiteren Läufer gekoppelt werden und die entsprechend benötigte Energiemenge auf den weiteren Läufer übertragen werden. Dies kann problemlos während des Verfahrens der beiden Läufer bewirkt werden, sodass eine Verzögerung des Transportvorgangs verhindert werden kann.

Nach einer Ausführungsform sind das Energieübertragungselement des Läufers und das Energieübertragungsgegenelement des weiteren Läufers jeweils als eine Steckverbindung mit einem Steckerelement und/oder einem Buchsenelement oder als eine Induktionsspule ausgebildet.

Hierdurch kann der technische Vorteil erreicht werden, dass über die Steckverbindung der als Stecker- bzw. Buchsenelemente ausgebildeten Energieübertragungselemente bzw. Energieübertragungsgegenelemente des Läufers bzw. des weiteren Läufers eine gesicherte Kopplung der beiden Läufer und damit verbunden eine gesicherte Energieübertragung ermöglicht ist. Durch die Steckverbindung ist eine robuste Kopplung der beiden Läufer erreicht.

Dies erleichtert die Energieübertragung beispielsweise während eines Verfahrens der beiden Läufer auf der Statoreinheit. Die Steckverbindung kann hierbei darüber erreicht werden, dass einer der beiden Läufer derart auf den jeweils anderen Läufer aufgefahren wird, dass ein Einführen des Steckerelements in das jeweilige Buchsenelement des weiteren Läufers erreicht wird. Ein komplizierter Kopplungsprozess zwischen den beiden Läufern kann dadurch vermieden werden.

Durch die Robustheit der Steckverbindung ist eine Steuerung der beiden Läufer, beispielsweise wenn der Energieübertragungsvorgang während des Fahrens der beiden Läufer durchgeführt werden soll, erleichtert. Die beiden Läufer werden durch die Steckverbindung an- bzw. miteinander gekoppelt. Dies erleichtert die Positionierung der beiden Läufer zueinander, insbesondere wenn die Kopplung während des Fahrens der beiden Läufer aufrechterhalten werden soll.

Durch die Ausbildung der Energieübertragungselemente bzw. Energieübertragungsgegenelemente als Induktionsspulen kann wiederum eine vereinfachte Kopplung der beiden Läufer zur Energieübertragung erreicht werden. Durch die kontaktlose Energieübertragung kann somit die Positionierung der beiden Läufer relativ zu einander zwecks Kopplung vereinfacht werden, da aufgrund der kontaktlosen Energieübertragung eine höhere Fehlertoleranz in der Positionierung der Energieübertragungselemente bzw. Energieübertragungsgegenelemente der beiden Läufer gestattet ist.

Alternativ kann das Planarantriebssystem eine Mehrzahl von Läufern mit Energieübertragungselementen und/oder Energieübertragungsgegenelementen aufweisen. Die Mehrzahl von Läufern kann über die Energieübertragungselemente und/oder Energieübertragungsgegenelemente an- bzw. miteinander gekoppelt werden, sodass eine Energieübertragung über eine Reihe von mehr als zwei aneinander gekoppelten Läufern ermöglicht ist. Aus der Mehrzahl von Läufern können mehr als ein Läufer oder alle Läufer mit Energiespeichern versehen sein. Bei der Energieübertragung können somit mehrere Läufer Energie zu der zu übertragenden Energiemenge beisteuern. Hierdurch kann eine Energiemenge an einen oder mehrere Läufer übertragen werden, die eine Energiemenge überschreitet, die in einem Energiespeicher eines einzigen Läufers speicherbar ist.

Nach einem Aspekt wird ein Läufer für ein Planarantriebssystem mit den Merkmalen des Anspruchs 10 bereitgestellt, wobei der Läufer wenigstens einen Energiespeicher und ein Energieübertragungselement aufweist.

Hierdurch kann der technische Vorteil erreicht werden, dass ein verbesserter Läufer bereitgestellt werden kann, der in einem Planarantriebssystem gemäß den oben beschriebenen Ausführungsformen und den entsprechenden technischen Vorteilen eingesetzt werden kann.

Nach einem Aspekt wird ein Verfahren gemäss Anspruch 11 zur Energieübertragung auf einen Läufer in einem Planarantriebssystem nach einer der voranstehenden Ausführungsformen bereitgestellt, wobei das Planarantriebssystem eine Steuereinheit, eine Statoreinheit und einen Läufer umfasst, wobei an der Statoreinheit eine Energieübertragungsstruktur mit einer Übertragungseinheit ausgebildet ist, wobei der Läufer eine mit der Übertragungseinheit koppelbare Übertragungsgegeneinheit umfasst, und wobei das Verfahren umfasst:
Ausgeben von Steuersignalen durch die Steuereinheit an wenigstens eine Spulengruppe der Statoreinheit zum Positionieren des Läufers in eine Energieladeposition relativ zur Energieübertragungsstruktur in einem ersten Ausgabeschritt, wobei in der Energieladeposition eine Kopplung zwischen der Übertragungseinheit der Energieübertragungsstruktur und der Übertragungsgegeneinheit des Läufers und eine mit der Kopplung verbundene Energieübertragung von der Energieübertragungsstruktur auf den Läufer bewirkbar ist; und
Ausgeben von Steuersignalen durch die Steuereinheit an die Energieübertragungsstruktur zum Ausführen der Energieübertragung von der Energieübertragungsstruktur auf den Läufer in einem zweiten Ausgabeschritt.

Hierdurch kann der technische Vorteil erreicht werden, dass ein verbessertes Verfahren zur Energieübertragung auf einen Läufer bereitgestellt werden kann. Hierzu wird der Läufer mit Energiespeicher in eine Energieladeposition relativ zu der Energieübertragungsstruktur gesteuert. In der Energieladeposition ist eine Kopplung der Übertragungseinheit der Energieübertragungsstruktur mit der Übertragungsgegeneinheit des Läufers koppelbar und eine Energieübertragung von der Energieübertragungsstruktur auf den Läufer möglich. Die Energieladeposition kann in Abhängigkeit Ausführung der Energieübertragungsstruktur und insbesondere in Abhängigkeit der Ausbildung der Übertragungseinheiten und Übertragungsgegeneinheiten variieren.

Nach einer Ausführungsform umfasst der erste Ausgabeschritt:
Ausgeben von Steuersignalen durch die Steuereinheit an wenigstens eine Spulengruppe zum Variieren einer Flughöhe des Läufers in der Energieladeposition und zum Koppeln der Übertragungseinheit der Energieübertragungsstruktur und der Übertragungsgegeneinheit des Läufers in einem dritten Ausgabeschritt.

Hierdurch kann der technische Vorteil erreicht werden, dass durch das Variieren der Flughöhe des Läufers relativ zur Statoreinheit eine optimale Kopplung der Übertragungseinheit der Energieübertragungsstruktur und der Übertragungsgegeneinheit des Läufers ermöglicht ist. Dies kann wiederum zu einer optimalen Energieübertragung von der Energieübertragungsstruktur auf den Läufer führen.

Nach einer Ausführungsform umfasst das Verfahren ferner:
Ausgeben von Steuersignalen durch die Steuereinheit an wenigstens eine Spulengruppe zum Steuern des Läufers in eine Auswurfposition in einem vierten Ausgabeschritt, wobei in der Auswurfposition ein Auslöseelement eines Fixiermechanismus, mittels dem der Energiespeicher am Läufer fixiert ist an einen Aktivierungsvorsprung einer an der Statoreinheit angeordneten Auslösestruktur angrenzt und hierdurch ausgelöst wird, und wobei durch Auslösen des Auslöseelements der Energiespeicher aus dem Fixiermechanismus ausgeworfen und von einem Aufnahmebereich der Auslösestruktur aufgenommen wird.

Hierdurch kann der technische Vorteil erreicht werden, dass ein vereinfachtes Entfernen eines Energiespeichers von einem Läufer durch Ansteuern des Läufers in eine dafür vorgesehene Auswurfposition relativ zur Auslösestruktur ermöglicht ist. Zusätzliche ansteuerbare Elemente werden zum Entfernen eines Energiespeichers von einem Läufer somit nicht benötigt.

Nach einer Ausführungsform umfasst das Verfahren ferner:
Ausgeben von Steuersignalen durch die Steuereinheit an wenigstens eine Spulengruppe der Statoreinheit zum Positionieren des Läufers in eine Übertragungsposition relativ zum einem weiteren Läufer des Planarantriebssystem in einem fünften Ausgabeschritt, wobei in der Übertragungsposition eine Kopplung zwischen einem Energieübertragungselement des Läufers mit einem Energieübertragungsgegenelement des weiteren Läufers und eine Energieübertragung vom Läufer an den weiteren Läufer und/oder eine Energieübertragung vom weiteren Läufer an den Läufer bewirkbar ist; und
Ausführen der Energieübertragung vom Läufer auf den weiteren Läufer und/oder vom weiteren Läufer an den Läufer in einem Übertragungsschritt.

Hierdurch kann der technische Vorteil erreicht werden, dass über die Kopplung zwischen dem Läufer und dem weiteren Läufer eine Energieübertragung zwischen den Läufern des Planarantriebssystems ermöglicht ist. Benötigt einer der Läufer des Planarantriebssystems beispielsweise zur Ausführung einer Prozessvorrichtung eine Energiemenge, so kann diese durch einen weiteren Läufer bereitgestellt werden. Der die Energiemenge benötigende Läufer muss somit zum Ausführen einer entsprechenden Energieübertragung nicht notwendigerweise zu einer entsprechenden Energieübertragungsstruktur verfahren werden, sondern kann direkt von einem anderen Läufer mit Energie versorgt werden. Hierzu kann entweder der die Energie benötigende Läufer zu einem Läufer fahren, der eine entsprechende Energiemenge bereitstellen kann. Alternativ kann der die Energiemenge bereitstellende Läufer zu dem die Energie benötigenden Läufer verfahren werden, um die Energieübertragung auszuführen.

Die Steuerung der Läufer und insbesondere das Erkennen, dass ein Läufer zum Ausführen einer Prozessvorrichtung Energie benötigt, und das Ermitteln eines Läufers, der in der Lage ist, die benötigte Energiemenge bereitzustellen, kann durch die Steuereinheit bewirkt werden. Die Steuereinheit kann hierzu Zugang zu entsprechenden Informationen bezüglich der einem Läufer zur Verfügung stehenden Energiemenge und Energieart haben. Alternativ oder zusätzlich können die Läufer der Steuereinheit durch Aussenden entsprechender Nachrichten den jeweiligen Energiestatus anzeigen.

Dies ermöglicht einen effizienten Transportvorgang, indem die Energie benötigenden Läufer mit entsprechender Energiemenge versehen werden können, ohne dass diese hierzu in eine vordefinierte Ladeposition verfahren werden müssen.

Nach einer Ausführungsform wird die Energieübertragung vom Läufer auf den weiteren Läufer oder vom weiteren Läufer auf den Läufer durch die Läufer oder die Steuereinheit gesteuert.

Hierdurch kann der technische Vorteil erreicht werden, dass eine präzise Steuerung zur Energieübertragung zwischen den Läufern ermöglicht ist. Die Steuereinheit kann hierzu durch Aussenden entsprechender Steuersignale an die Läufer die Energieübertragung steuern. Alternativ steuern die Läufer selbstständig die Energieübertragung. Hierzu können die Läufer jeweils eine interne Kommunikationseinheit und eine Steuereinheit umfassen, über die zum einen eine Datenkommunikation zwischen den Läufern durchgeführt und die Energieübertragung bewirkt werden kann.

Nach einer Ausführungsform erkennt die Steuereinheit, dass der Läufer und/oder der weitere Läufer eine Energiemenge benötigt und eine Energieübertragung auszuführen ist, und/oder dass der Läufer und/oder der weitere Läufer in der Lage ist, eine entsprechende Energiemenge bereitzustellen, und/oder wobei der Läufer und/oder der weitere Läufer durch Aussenden einer entsprechenden Nachricht an die Steuereinheit der Steuereinheit signalisieren, dass eine Energiemenge benötigt wird und eine Energieübertragung auszuführen ist.

Hierdurch kann der technische Vorteil erreicht werden, dass eine präzise Energieübertragung zwischen den Läufern ermöglicht ist. Hierzu kann die Steuereinheit Zugang zu den Informationen bezüglich der Energieversorgungszustände der einzelnen Läufer haben und hierüber erkennen, wann ein Läufer beispielsweise zum Ausführen einer Prozessvorrichtung Energie benötigt, und welcher Läufer eine entsprechende Energiemenge bereitstellen kann. Die Steuereinheit kann darauffolgend entsprechende Steuersignal ausgeben, um eine Energieübertragung zu bewirken.

Die Information bezüglich des Energieversorgungszustands kann jedoch auch von den Läufern direkt an die Steuereinheit ausgesendet werden. Die Läufer können direkt bei der Steuereinheit eine Energieübertragung anfordern, die darauffolgend durch die Steuereinheit veranlasst werden kann. Dies ermöglicht eine zuverlässige Energieübertragung, bei der die Energie unmittelbar bei Bedarf den Läufern bereitgestellt werden kann.

Ferner können die Läufer, beispielsweise nach Anfrage durch die Steuereinheit, der Steuereinheit anzeigen, wieviel Energie der jeweilige Läufer bei einer Energieübertragung bereitstellen kann.

Nach einer Ausführungsform erfolgt das Koppeln des Läufers mit dem weiteren Läufer und das Übertragen der Energie vom Läufer auf den weiteren Läufer während eines Fahrens des Läufers und des weiteren Läufers.

Hierdurch kann der technische Vorteil erreicht werden, dass durch die Energieübertragung vom Läufer an den jeweils weiteren Läufer während des Fahrens beider Läufer ermöglicht ist, der Transportvorgang der zu transportierenden Objekte durch den weiteren Läufer durch die Energieübertragung nicht unterbrochen werden muss. Hierdurch kann der Transportvorgang weiter optimiert werden.

Die Erfindung wird anhand der beigefügten Figuren näher erläutert. Hierbei zeigen:
- Fig. 1: eine schematische Darstellung eines Planarantriebssystems mit einer Statoreinheit und zwei Läufern gemäß einer Ausführungsform;
- Fig. 2: eine schematische Darstellung eines Statormoduls der Statoreinheit in Fig. 1;
- Fig. 3: eine schematische Darstellung einer Unterseite eines Läufers gemäß einer Ausführungsform;
- Fig. 4: eine weitere schematische Darstellung eines Planarantriebssystems mit einer Statoreinheit und zwei Läufern in zwei unterschiedlichen Kopplungszuständen gemäß einer weiteren Ausführungsform;
- Fig. 5: verschiedene schematische Darstellungen eines Läufers mit einem Energiespeicher gemäß einer Ausführungsform; Fig. 5c stellt eine Variante dar.
- Fig. 6: eine schematische Darstellung eines Planarantriebssystems mit einer Statoreinheit, einem Läufer und einer Energieübertragungsstruktur gemäß einer weiteren Ausführungsform;
- Fig. 7: zwei weitere schematische Darstellungen eines Planarantriebssystems mit einer Statoreinheit, einem Läufer und einer Energieübertragungsstruktur gemäß einer weiteren Ausführungsform;
- Fig. 8: eine weitere schematische Darstellung eines Planarantriebssystems mit einer Statoreinheit, einem Läufer und einer Energieübertragungsstruktur gemäß einer weiteren Ausführungsform;
- Fig. 9: eine weitere schematische Darstellung eines Planarantriebssystems mit einer Statoreinheit, einem Läufer und einer Energieübertragungsstruktur gemäß einer weiteren Ausführungsform;
- Fig. 10: eine weitere schematische Darstellung eines Planarantriebssystems mit einer Statoreinheit, einem Läufer und einer Energieübertragungsstruktur gemäß einer weiteren Ausführungsform;
- Fig. 11: eine weitere schematische Darstellung eines Planarantriebssystems mit einer Statoreinheit, einem Läufer und einer Energieübertragungsstruktur gemäß einer weiteren Ausführungsform;
- Fig. 12: eine weitere schematische Darstellung eines Planarantriebssystems mit zwei Statoreinheiten, einem Läufer und einer Energieübertragungsstruktur gemäß einer weiteren Ausführungsform;
- Fig. 13: eine weitere schematische Darstellung eines Planarantriebssystems mit zwei Statoreinheiten, einem Läufer und einer Energieübertragungsstruktur gemäß einer weiteren Ausführungsform;
- Fig. 14: eine weitere schematische Darstellung eines Planarantriebssystems mit einer Statoreinheit, einem Läufer und einer Energieübertragungsstruktur gemäß einer weiteren Ausführungsform;
- Fig. 15: eine schematische Draufsicht und zwei schematische Schnittdarstellungen eines Planarantriebssystems mit einer Statoreinheit, einem Läufer und einer Energieübertragungsstruktur gemäß einer weiteren Ausführungsform;
- Fig. 16: zwei weitere schematische Darstellungen eines Läufers mit einem Energiespeicher gemäß zweier weiterer Ausführungsformen;
- Fig. 17: eine schematische Darstellung eines Planarantriebssystems mit einer Statoreinheit, einem Läufer und einer Auslösestruktur gemäß einer Ausführungsform;
- Fig. 18: ein Flussdiagramm eines Verfahrens zur Energieübertragung auf einen Läufer eines Planarantriebssystems gemäß einer Ausführungsform; und
- Fig. 19: ein Flussdiagramm eines Verfahrens zur Energieübertragung auf einen Läufer eines Planarantriebssystems gemäß einer Ausführungsform.

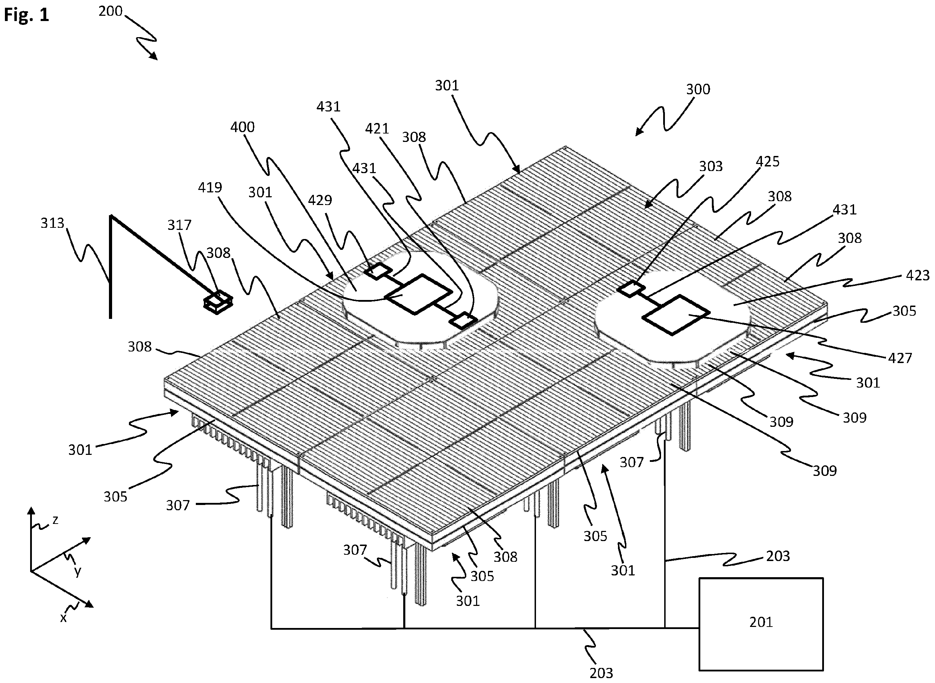

Fig. 1 zeigt eine schematische Ansicht eines Planarantriebssystems 200 mit einer Statoreinheit 300 und einem Läufer 400.

Gemäß der Ausführungsform in Fig. 1 umfasst das Planarantriebssystem eine Steuereinheit 201, eine Statoreinheit 300, einen Läufer 400 und einen weiteren Läufer 423. Die Steuereinheit 201 ist über eine Datenverbindung 203 mit der Statoreinheit 300 verbunden. Die Steuereinheit 201 ist eingerichtet, die Läufer 401, 421 auf der Statoreinheit 300 anzusteuern und auf dieser zu verfahren.

In der gezeigten Ausführungsform umfasst die Statoreinheit 300 eine Mehrzahl von Statormodulen 301, die entlang einer X-Richtung und einer Y-Richtung der Statoreinheit 300 nebeneinander angeordnet sind und eine zusammenhängende ebene Statoroberfläche 303 der Statoreinheit 300 bilden. In der gezeigten Ausführungsform umfasst die Statoreinheit 300 sechs Statormodule 301. Die Anzahl der miteinander verbundenen Statormodule 301 einer Statoreinheit 300 soll jedoch nicht hierauf beschränkt sein und kann beliebig variieren.

So kann eine erfindungsgemäße Statoreinheit 300 aus nur einem Statormodul 301, aber auch aus einer Mehrzahl an beliebig angeordneten, verbundenen Statormodulen 301 bestehen, die dann eine zusammenhängende Statoroberfläche 303 bilden. In der gezeigten Ausführungsform ist die Steuereinheit 201 mit jedem Statormodul 301 verbunden, sodass jedes Statormodul 301 individuell ansteuerbar ist. In Fig. 1 sind aufgrund der perspektivischen Darstellung nicht alle Verbindungen zu allen Statormodulen 301 sichtbar.

Jedes der Statormodule 301 weist in der gezeigten Ausführungsform vier Statorsegmente 308 auf. Jedes Statorsegment umfasst X-Spulengruppen und Y-Spulengruppen, die jeweils entlang der X-Richtung oder der Y-Richtung orientiert sind. Alternativ können die Statormodule 301 auch eine andere Anzahl von Statorsegmenten 308 umfassen.

Die Statorsegmente 308 sind in der gezeigten Ausführungsform quadratisch ausgebildet und entlang der X-Richtung und der Y-Richtung fluchtend an einander anschließend angeordnet. Jedes Statorsegment 308 umfasst eine Mehrzahl von bestrombaren Statorleitern 309, die in den Spulengruppen zusammengefasst sind und entlang der X-Richtung oder entlang der Y-Richtung (in Fig. 1 nicht dargestellt) orientiert sind. Über eine Bestromung der Statorleiter 309 der Spulengruppen lassen sich Statormagnetfelder erzeugen.

Mittels einer magnetischen Kopplung zwischen den Statormagnetfeldern und einem Läufermagnetfeld des Läufers 400 ist der Läufer 400 zumindest entlang der X-Richtung, der Y-Richtung oder einer kombinierten XY-Richtung schwebend über die Statoroberfläche 303 verfahrbar. Ein Bewegen des Läufers 400 ist ferner in einer zur X-Richtung und zur Y-Richtung senkrecht orientierten Z-Richtung möglich. Auf diese Weise kann der Abstand des Läufers 400 zu der Statorfläche 303 variiert, der Läufer 400 also über der Statorfläche 303 angehoben oder abgesenkt werden.

Die Statormodule 301 weisen jeweils ein Statormodulgehäuse 305 auf, in dem eine Steuerelektronik (nicht gezeigt) zum Ansteuern des Statormoduls 301, insbesondere zum Steuern der Bestromung der einzelnen Spulengruppen, angeordnet ist. Ferner sind im Statormodulgehäuse 305 Magnetfeldsensoren (nicht gezeigt) zum Detektieren des Läufermagnetfelds des Läufers 400 angeordnet. Zur Leistungs- und Datenversorgung der Steuerelektronik weist jedes Statormodul 301 entsprechende Anschlussleitungen 307 auf.

Erfindungsgemäß weist der Läufer 400 ferner einen Energiespeicher 419 und eine mit dem Energiespeicher 419 verbundene Übertragungsgegeneinheit 429 auf. Die Übertragungsgegeneinheit 429 ist in der gezeigten Ausführungsform über eine Energieübertragungsverbindung 431 mit dem Energiespeicher 419 verbunden.

Das Planarantriebssystem 200 weist ferner eine Energieübertragungsstruktur 313 mit einer Übertragungseinheit 317 auf. Die Übertragungseinheit 317 der Energieübertragungsstruktur 313 ist mit der Übertragungsgegeneinheit 429 des Läufers 400 koppelbar. Über eine Kopplung der Übertragungseinheit 317 und der Übertragungsgegeneinheit 429 ist eine Energieübertagung von der Energieübertragungsstruktur 313 auf den Läufer 400 ermöglicht. Die übertragene Energie kann darauffolgend im Energiespeicher 419 des Läufers 400 gespeichert werden.

In der gezeigten Ausführungsform ist die Energieübertragungsstruktur 313 neben der Statoreinheit 300 angeordnet und kann durch den Läufer 400 kontaktiert werden, indem der Läufer 400 in eine entsprechend zur Energieübertragung geeignete Position verfahren wird.

Die in Fig. 1 gezeigte Energieübertragungsstruktur 313 ist in der gezeigten Ausführungsform in der jeweiligen Ausgestaltung lediglich beispielhaft. In einer anderen Ausführungsform kann die Energieübertragungsstruktur 313 auch anders ausgestaltet sein.

Auch kann das Planarantriebssystem 200 eine Mehrzahl von Energieübertragungsstrukturen 313 aufweisen, die an verschiedenen Stellen an der Statoreinheit 300 ausgebildet sind. Der Läufer 400 kann somit an verschiedenen Stellen eine Energieübertragungsstruktur 313 kontaktieren und mit Energie versorgt werden.

Die Energieübertragungsstruktur 313 kann darüber hinaus über einen ausgedehnten Bereich an der Statoreinheit 300 ausgedehnt angeordnet sein. Der Läufer 400 kann somit bei einem Vorbeifahren an der Energieübertragungsstruktur 313 mit Energie versorgt werden.

Gemäß einer Ausführungsform kann der Läufer 400 eine Mehrzahl von Übertragungsgegeneinheiten 429 aufweisen. Diese können beispielsweise an verschiedenen Stellen am Läufer 400 ausgebildet sein. Der Läufer 400 kann somit in unterschiedlichen Orientierungen relativ zur Statoreinheit 300 mit der jeweiligen Energieübertragungsstruktur 313 kontaktieren.

Alternativ kann der Läufer 400 gleichzeitig mehrere Energieübertragungsstrukturen 313 kontaktieren.

Die durch die Energieübertragungsstruktur 313 bereitgestellte und in dem Energiespeicher 419 speicherbare Energie kann in unterschiedlichen Energiearten vorliegen. Die durch die Energieübertragungsstruktur 313 bereitgestellte Energie kann beispielsweise eine elektrische Energie, eine chemische Energie, eine thermische Energie oder eine potentielle Energie oder eine kinetische Energie sein.

Der Energiespeicher 419 kann entsprechend ausgebildet sein, die durch die Energieübertragungsstruktur 313 bereitgestellte Energieart aufzunehmen und zu speichern. Der Energiespeicher 419 kann somit als eine Batterieeinheit zum Speichern von elektrischer Energie ausgebildet sein. Alternativ kann der Energiespeicher 419 als ein Medienspeicher zum Speichern eines Energieübertragungsmediums ausgebildet sein.

Das Energieübertragungsmedium kann beispielsweise ein Kraftstoff in Gestalt eines brennbaren Fluids, beispielsweise eines brennbaren Gases wie Wasserstoff oder einer brennbaren Flüssigkeit wie Öl oder Benzin sein. Alternativ kann das Energieübertragungsmedium ein Fluid als Träger einer Wärmemenge sein. Alternativ kann das Energieübertragungsmedium ein unter Druck stehendes Gas, wie Druckluft, sein. Alternativ kann der Energiespeicher 419 zum Speichern von mechanischer Energie auch eine entsprechende Speichervorrichtung umfassen. Diese Speichervorrichtung kann beispielsweise als ein Flywheel ausgebildet sein.

Der Energiespeicher 419 kann auch ausgestaltet sein, verschiedene Energiearten zu speichern. Der Energiespeicher 419 kann hierzu unterschiedliche Abschnitte aufweisen, in denen die unterschiedlichen Energiearten gespeichert werden können.

Die Energieübertragungsverbindungen 431 zwischen dem Energiespeicher 419 und der Übertragungsgegeneinheit 429 und dem Energieübertragungselement 421 sind entsprechend ausgebildet, die bereitgestellte Energie zum oder vom Energiespeicher 419 weiterzuleiten. In Abhängigkeit der jeweiligen Energieart können die Energieübertragungsverbindungen 431 als Kabel zum Übertragen von elektrischer Energie oder als Rohre bzw. Schläuche zum Übertragen des Energieübertragungsmediums ausgebildet sein.

Die Energieübertragungsstruktur 313 ist hierbei entsprechend ausgebildet, die Energie auf den Läufer 400 zu übertragen. So kann die Übertragungseinheit 317 als ein elektrisches Steckerelement zum Übertragen von elektrischer Energie oder als ein Düsenelement zum Übertragen des Energieübertragungsmediums ausgebildet sein.

Die Energieübertragungsstruktur 313 kann auch eingerichtet sein, verschiedene Energieformen an die Läufer 400 zu übertragen. So kann die Energieübertragungsstruktur 313 eine Mehrzahl von Übertragungseinheiten 317 zum Übertragen von elektrischer Energie und/oder chemischer Energie und/oder thermischer Energie und/oder potentieller Energie und/oder kinetischer Energie umfassen.

Entsprechend kann der Läufer 400 eine Mehrzahl von Übertragungsgegeneinheiten 429 umfassen, die eine Übertragung von elektrischer Energie und/oder chemischer Energie und/oder thermischer Energie und/oder potentieller und/oder kinetischer Energie umfassen. Entsprechend kann der Energiespeicher 419 mehrere Einheiten umfassen, die eine gleichzeitige Speicherung von elektrischer Energie und/oder chemischer Energie und/oder thermischer Energie und/oder potentieller Energie und/oder kinetischer Energie ermöglichen.

In der gezeigten Ausführungsform umfasst der Läufer 400 ferner ein mit dem Energiespeicher 419 verbundenes Energieübertragungselement 421. Das Energieübertragungselement 421 ist in der gezeigten Ausführungsform über eine Energieübertragungsverbindung 431 mit dem Energiespeicher 419 verbunden.

In der gezeigten Ausführungsform weist der weitere Läufer 423 ein mit dem Energieübertragungselement 421 des Läufers 400 koppelbares Energieübertragungsgegenelement 425 auf. Der weitere Läufer 423 weist ferner eine über eine weitere Energieübertragungsverbindung 431 mit dem Energieübertragungsgegenelement 425 verbundene Prozessvorrichtung 427 auf.

Der Energiespeicher 419 dient zur Speicherung von Energie auf dem Läufer 400. Über die Kopplung der beiden Läufer 400, 423 über das Energieübertragungselement 421 und das entsprechende Energieübertragungsgegenelement 425 kann die Energie aus dem Energiespeicher 419 vom Läufer 400 auf den weiteren Läufer 423 übertragen werden und auf dem weiteren Läufer 423 zum Betrieb der Prozessvorrichtung 427 genutzt werden.

Eine derartige Prozessvorrichtung 427 dient erfindungsgemäß zur Ausführung eines technischen Prozesses auf dem weiteren Läufer 423. Der technische Prozess kann beispielsweise ein Fertigen und/oder Verarbeiten eines auf dem weiteren Läufer 423 zu transportierenden Objektes sein. Die Prozessvorrichtung 427 kann beispielsweise einen Heizer oder Kühler zum Heizen oder Kühlen des zu transportierenden Objekts umfassen.

Alternativ oder zusätzlich kann die Prozessvorrichtung 427 einen Mischer oder Entmischer zum Mischen oder Entmischen von Objekten oder Stoffen umfassen. Ferner kann die Prozessvorrichtung 427 eine Sortier- bzw. Lade-/Entladevorrichtung umfassen. Die Prozessvorrichtung 427 kann beispielsweise einen Greifarm umfassen, mit dem Objekte vom weiteren Läufer 423 entladen bzw. auf den weiteren Läufer 423 geladen oder auf dem Läufer 400 gehalten, orientiert oder ausgerichtet werden können. Die genannten Beispiele sind nicht beschränkend. Auf dem weiteren Läufer 423 sind verschiedene Vorrichtungen realisierbar.

Alternativ zu der gezeigten Ausführungsform kann auf dem Läufer 400 ebenfalls eine entsprechende Prozessvorrichtung 427 ausgebildet sein, die über die Energie des Energiespeichers 421 betrieben werden kann. Ferner kann auf dem weiteren Läufer 423 ein entsprechender Energiespeicher ausgebildet sein. Eine Energieübertragung vom Läufer 400 auf den weiteren Läufer 423 kann dann beispielsweise erfolgen, wenn die Energie des Energiespeichers auf dem weiteren Läufer 423 zum Ausführen der Prozessvorrichtung 427 nicht ausreicht.

Die in der folgenden Beschreibung zum Läufer 400 beziehungsweise dem weiteren Läufer 423 gemachten Aussagen, treffen also stets für den Läufer 400 als auch für den weitere Läufer 423 zu und können beliebig miteinander kombiniert werden.

Sowohl der Läufer 400 als auch der weitere Läufer 423 können darüber hinaus weitere Energieübertragungselemente 421 und/oder Energieübertragungsgegenelemente 425 aufweisen. Hierdurch ist für jeden Läufer 400, 423 eine gleichzeitige Kopplung mit einer Mehrzahl von Läufern 400, 423 möglich. Hierdurch kann eine Energieübertragung über eine Mehrzahl von aneinander gekoppelter Läufer 400, 423 erreicht werden.

Auch kann über die mehreren Energieübertragungselemente 421 bzw. Energieübertragungsgegenelemente 425 gleichzeitig Energie verschiedener Energiearten übertragen werden. So kann beispielsweise vom Läufer 400 gleichzeitig elektrische und chemische oder thermische Energie auf den weiteren Läufer 423 übertragen werden.

Die Energieübertragungselemente 421 bzw. Energieübertragungsgegenelemente 425 sind hierbei zur Übertragung von Energie unterschiedlicher Energieart ausgebildet.

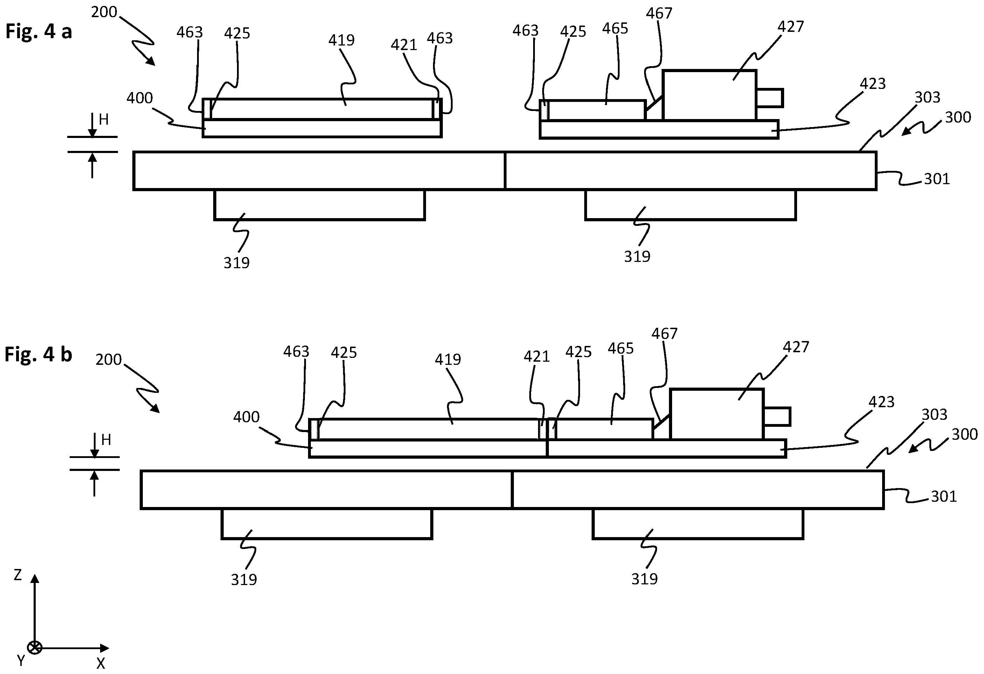

Für eine detaillierte Beschreibung des Energiespeichers 419 und der Anordnung bzw. Verwendung des Energiespeichers 419 auf dem Läufer 400 wird auf die Beschreibung zu den Figuren 4 bis 19 verwiesen.

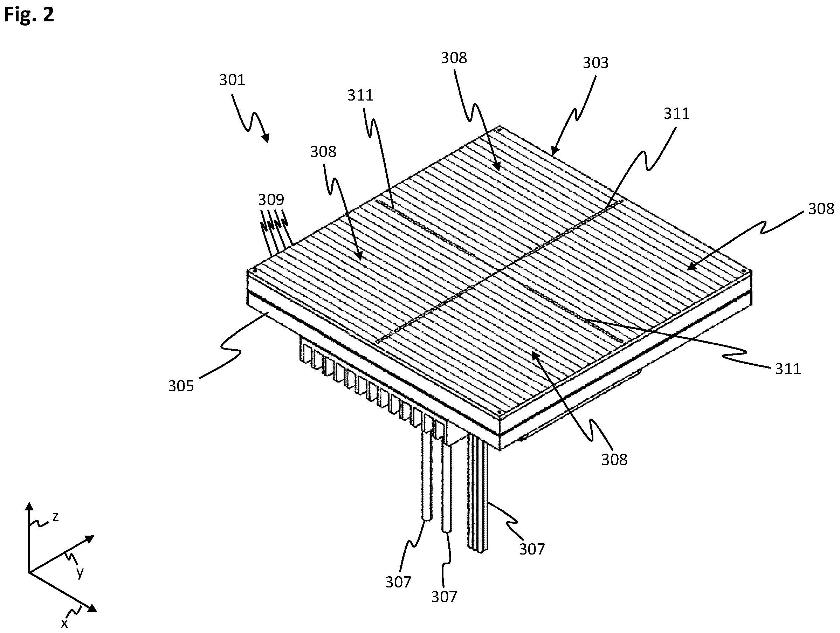

Fig. 2 zeigt eine schematische Ansicht eines Statormoduls 301 der Statoreinheit 300 aus Fig. 1.

Das Statormodul 301 umfasst in der gezeigten Ausführungsform vier Statorsegmente 308 mit entlang der X-Richtung orientierten Statorleitern 309 auf. Die Statorleiter 309 können voneinander elektrisch isoliert angeordnet sein. Die vier Statorsegmente 308 sind quadratisch ausgebildet und bilden eine quadratische Statoroberfläche 303. Die Statorsegmente 308 sind durch eine Kontaktstruktur 311 separiert, die eine Verbindung der Statorleiter 309 mit der Ansteuerelektronik und einen kompakten Aufbau der Statoreinheit 300 ermöglicht.

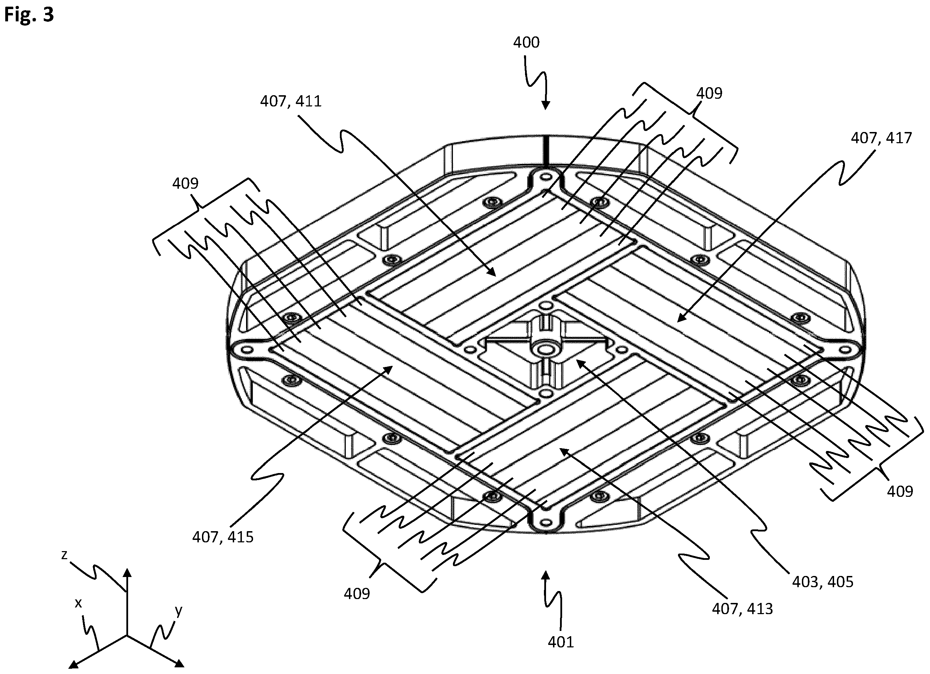

Fig. 3 zeigt eine schematische Darstellung einer Unterseite eines Läufers 400 aus Fig. 1 gemäß einer Ausführungsform.

Im Betrieb des Planarantriebssystems 200 ist die Unterseite des Läufers 400 der Statoroberfläche 303 der Statoreinheit 300 zugewandt angeordnet. Der Läufer 400 weist an der Unterseite eine Magnetanordnung 401 mit vier Magneteinheiten 407, also einer ersten X-Magneteinheit 411, einer zweiten X-Magneteinheit 413, einer ersten Y-Magneteinheit 415 und einer zweiten Y-Magneteinheit 417 auf. Jede Magneteinheit 407 weist wiederum eine Mehrzahl von Magnetelementen 409 auf. In der gezeigten Ausführungsform weist jede Magneteinheit 407 fünf Magnetelemente 409 auf, die als rechteckig längsgestreckte Elemente ausgebildet sind.

Beispielsweise können die Magneteinheiten 407 jeweils als Halbach-Array-Magneteinheit ausgebildet sein. Die Magnetanordnung 401 ist ausgebildet das Läufermagnetfeld des Läufers 400 zu generieren, über das eine magnetische Kopplung mit den Statormagnetfeldern der Statoreinheit 300 erreichbar ist. Über die magnetische Kopplung kann eine Steuerung bzw. ein Verfahren des Läufers 400 relativ zur Statoreinheit 300 erreicht werden.

In der gezeigten Ausführungsform sind die erste X-Magneteinheit 411 und die zweite X-Magneteinheit 413 jeweils parallel zu einer X-Richtung des Läufers 400 orientiert während die erste Y-Magneteinheit 415 und die zweite Y-Magneteinheit 417 entlang einer Y-Richtung orientiert sind. Die ersten und zweiten X-Magneteinheiten 411, 413 dienen im Betrieb einem Antrieb des Läufers 400 entlang der Y-Richtung des Läufers 400, und die ersten und zweiten Y-Magneteinheit 415, 417 dienen im Betrieb einem Antrieb des Läufers 400 in X-Richtung. Darüber hinaus dienen die Magneteinheiten 407 einem Antrieb in eine zur X-Richtung und zur Y-Richtung senkrecht orientierten Z-Richtung oder zur Ausführung von Drehungen und Kippbewegungen des Läufers 400.

In der Mitte der Magnetanordnung 401 kann der Läufer 400 eine Freifläche 403 aufweisen, die nicht von Magneten der Magnetanordnung 401 bedeckt wird. Im Bereich der Freifläche 403 kann der Läufer 400 eine Befestigungsstruktur 405 aufweisen. Fig. 4 zeigt eine weitere schematische Darstellung eines Planarantriebssystems 200 mit einer Statoreinheit 300 und zwei Läufern 400, 423 gemäß einer weiteren Ausführungsform in zwei Kopplungszuständen.

Fig. 4 ist eine schematische Seitenansicht des Planarantriebssystems 200 aus Fig. 1.

Der Läufer 400 umfasst den Energiespeicher 419. Am Energiespeicher 419 ist ein Energieübertragungselement 421 und ein Energieübertragungsgegenelement 425 angeordnet. Die beiden Elemente sind jeweils an zwei gegenüberliegenden Seitenbereichen 463 des Läufers 400 angeordnet.

Der weitere Läufer 423 umfasst die Prozessvorrichtung 427. Der weitere Läufer 423 umfasst in der gezeigten Ausführungsform ferner einen weiteren Energiespeicher 465. Der weitere Energiespeicher 465 ist über eine weitere Energieübertragungsverbindung 467 mit der Prozessvorrichtung 427 verbunden. Am weiteren Energiespeicher 465 ist ferner ein weiteres Energieübertragungsgegenelement 425 angeordnet.

In Fig. 4 a) sind die beiden Läufer 400, 423 nicht in der Übertragungsposition zueinander angeordnet und die Energieübertragungselemente 421 bzw. Energieübertragungsgegenelemente 425 der beiden Läufer 400, 423 sind nicht miteinander gekoppelt.

Die Statoreinheit 300 umfasst in der gezeigten Ausführungsform zwei Statormodule 301. Jedes Statormodul 301 weist eine Statorbasis 319 auf. Die Statorleiter 309 bzw. die Spulengruppen, mittels denen das Statormagnetfeld zum Ansteuern der Läufer 400, 423 generierbar ist, wie auch die Steuereinheit 201, ist in der gezeigten Grafik nicht dargestellt.

Die Läufer 400, 423 umfassen jeweils die oben beschriebenen Magneteinheiten, mittels denen das entsprechende Läufermagnetfeld generiert werden kann. Diese sind in der gezeigten Grafik ebenfalls nicht dargestellt. Durch die magnetische Kopplung der Läufermagnetfelder der beiden Läufer 400, 423 mit dem Statormagnetfeld der Statoreinheit 300 sind die Läufer 400, 423 in einer Flughöhe H über der Statoreinheit 300 verfahrbar.

In Fig. 4 b) sind die beiden Läufer 400, 423 in der Übertragungsposition zueinander angeordnet. Die Übertragungsposition der Läufer 400, 423 zueinander definiert hierbei keine absolute Position der beiden Läufer 400, 423 relativ zur Statoreinheit 300, sondern ist darüber ausgezeichnet, dass eine Kopplung wenigstens eines Energieübertragungselements 421 des Läufer 400 mit wenigstens einem Energieübertragungsgegenelement 425 des weiteren Läufers 423 ermöglicht oder erfolgt ist.

Eine Energieübertragung ist somit auch während des Fahrens der beiden Läufer 400, 423 möglich. Hierzu können die beiden Läufer 400, 423 derart angesteuert werden, dass die beiden Läufer 400, 423 mit einer definierten Kraft aneinander angedrückt sind, um hierüber die Kopplung der Energieübertragungselemente 421 und Energieübertragungsgegenelemente 425 zu bewirken.

Die Energieübertragungselemente 421 bzw. Energieübertragungsgegenelemente 425 können beispielsweise als Stecker/Buchsenelemente ausgebildet sein. Eine Kopplung der Energieübertragungselemente 421 bzw. Energieübertragungsgegenelemente 425 kann hierbei über eine Steckverbindung realisiert sein.

Die Energieübertragungselemente 421 bzw. Energieübertragungsgegenelemente 425 können ferner als Düsenelemente bzw. entsprechende Aufnahmeelemente ausgebildet sein, mittels denen Hochdruckluft bzw. Benzin oder andere Energie übertragende Medien übertragen werden können.

Alternativ oder zusätzlich hierzu können die Energieübertragungselemente 421 bzw. Energieübertragungsgegenelemente 425 Induktionsspulen umfassen. Die Energieübertragung der Energie des Energiespeichers 419 des Läufers 400 auf den Läufer 423 kann hierbei über eine kontaktlose Energieübertragung mittels der Induktionsspulen erreicht werden. Eine Übertragungsposition der beiden Läufer 400, 423 relativ zueinander kann hierbei darüber definiert sein, dass in der jeweiligen Positionierung der beiden Läufer 400, 423 zueinander eine berührungslose Energieübertragung zwischen den jeweiligen Induktionsspulen der beiden Läufer 400, 423 ermöglicht ist.

Der Energiespeicher 419 bzw. der weitere Energiespeicher 465 kann beispielsweise als eine Batterieeinheit zum Speichern von elektrischer Energie ausgebildet sein. Alternativ oder zusätzlich können die Energiespeicher 419, 465 Benzin- bzw. Ölspeicher, Druckluftspeicher oder Speicher anderer Energie übertragender Medien umfassen. Die Prozessvorrichtungen 427 können entsprechend ausgebildet sein, um mit der jeweils durch die Energiespeicher 419, 465 bereitgestellten Energieart betrieben zu werden.

Die Prozessvorrichtung 427 kann beispielsweise einen Heizer/ein Kühlelement zum Heizen bzw. Kühlen eines zu transportierenden Objekts umfassen. Alternativ oder zusätzlich kann die Prozessvorrichtung 427 einen Greifarm, eine Lade- bzw. Entladevorrichtung, eine Sortiervorrichtung, eine Misch-/Entmisch-Vorrichtung oder eine ähnliche Vorrichtung zum Ausführen eines Automatisierungsprozesses umfassen.

Zum Übertragen der Energie des Energiespeichers 419 des Läufers 400 auf den weiteren Läufer 423 kann die Steuereinheit 201 entsprechende Befehle an den Läufer 400 bzw. den weiteren Läufer 423 ausgeben. Alternativ oder zusätzlich hierzu kann eine Datenkommunikation zwischen den Läufern 400, 423 realisiert sein, über die eine Energieübertragung vom Läufer 400 auf den weiteren Läufer 423 unabhängig von der Steuereinheit 201 bewirkt werden kann. Hierzu können die Läufer 400, 423 entsprechende Steuereinheiten 201 und Kommunikationselemente, in Fig. 4 nicht dargestellt, umfassen, mittels denen die Kommunikation und die Energieübertragung bzw. die Datenkommunikation zwischen den Läufern 400, 423 realisiert werden kann.

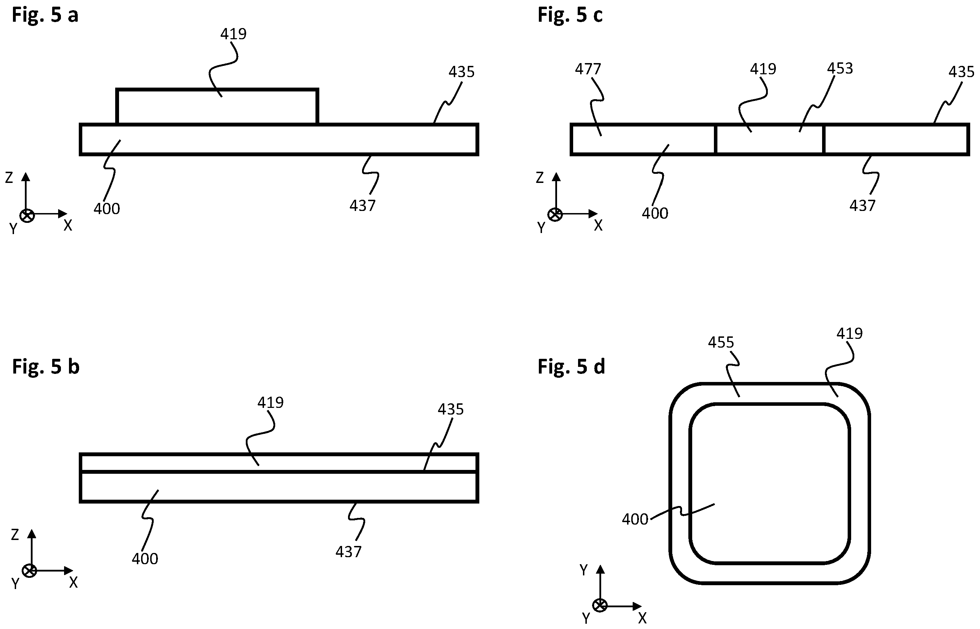

Fig. 5 zeigt vier verschiedene schematische Darstellungen eines Läufers 400 mit einem Energiespeicher 419 gemäß einer Ausführungsform.

In Fig. 5 sind vier verschiedene Ausführungsformen des oben beschriebenen Energiespeichers 419 auf dem Läufer 400 dargestellt. In Fig. 5 a) ist der Energiespeicher 419 an einer Oberseite 435 des Läufers 400 angeordnet. Die Anordnung des Energiespeichers 419 an der Oberseite 435 des Läufers 400 kann hierbei je nach Anwendung des Läufers 400 an verschiedenen Positionen an der Oberseite 435 erfolgen.

In Fig. 5 b) ist der Energiespeicher 419 flächig auf der gesamten Oberseite 435 des Läufers 400 ausgebildet.

In Fig. 5 c) ist der Energiespeicher 419 zentral an einem Zentrum 453 des Läufers 400 in einer Läuferbasis 477 des Läufers 400 integriert. Die Läuferbasis 477 des Läufers 400 umfasst hierbei die innerhalb eines Gehäuses des Läufers 400 angeordneten Komponenten. Der Energiespeicher 419 kann somit innerhalb des Gehäuses des Läufers 400 installiert sein. Fig. 5c) zeigt eine Variante.

In Fig. 5 d) ist der Energiespeicher 419 in einer Umrandungsstruktur 455 des Läufers 400 integriert.

Alternativ zu den hier gezeigten Beispielen kann der Energiespeicher 419, in Abhängigkeit zu der jeweiligen Ausbildung des Energiespeichers 419 und/oder in Abhängigkeit der jeweiligen Anwendung des Läufers 400 an anderen Positionen am bzw. im Läufer 400 angeordnet sein.

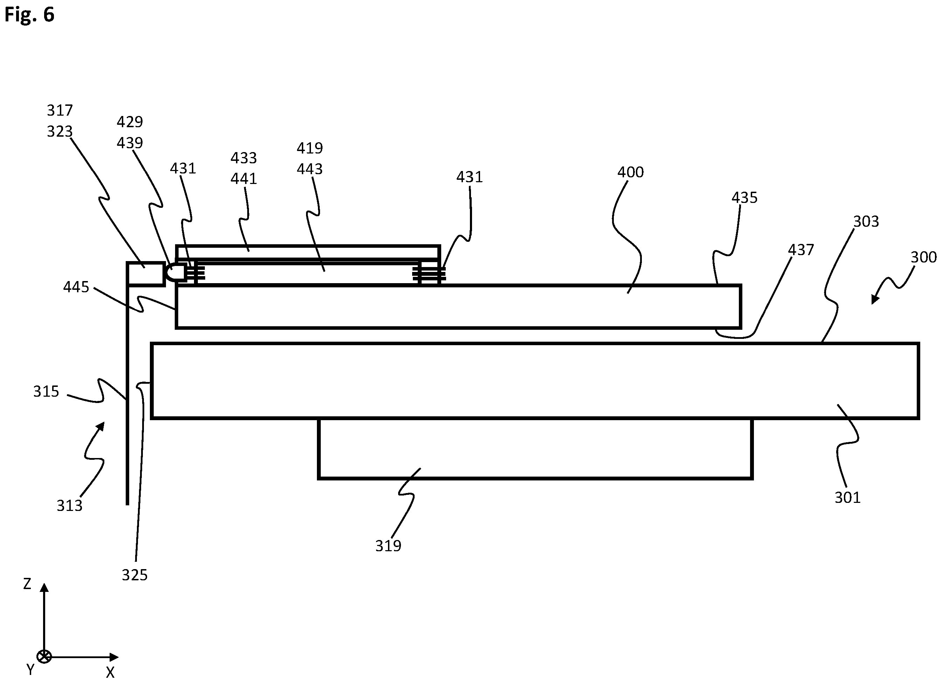

Fig. 6 zeigt eine schematische Darstellung eines Planarantriebssystems 200 mit einer Statoreinheit 300, einem Läufer 400 und einer Energieübertragungsstruktur 313 gemäß einer Ausführungsform.

In der gezeigten Ausführungsform ist der Energiespeicher 419 in einem Fixiermechanismus 433 am Läufer 400 angeordnet. Im Fixiermechanismus 433 ist der Energiespeicher 419 am Läufer 400 fixiert. In der gezeigten Ausführungsform ist der Fixiermechanismus 433 als ein Gehäuse 441 ausgebildet.

In der gezeigten Ausführungsform ist der Energiespeicher 419 ferner als eine Batterieeinheit 443 ausgebildet. Am Energiespeicher 419 sind ferner Energieübertragungsverbindungen 431 ausgebildet, mit denen der Energiespeicher 419 elektrisch mit weiteren Komponenten verbindbar ist.

In der gezeigten Ausführungsform ist der Energiespeicher 419 über eine Energieübertragungsverbindung431 mit einer Übertragungsgegeneinheit 429 verbunden.

Über die Übertragungsgegeneinheit 429 ist der Energiespeicher 419 des Läufers 400 mit einer Übertragungseinheit 317 einer Energieübertragungsstruktur 313 verbindbar. In der gezeigten Ausführungsform ist die Energieübertragungsstruktur 313 an einem Seitenbereich 325 der Statoreinheit 300 ausgebildet. Über die Energieübertragungsstruktur 313 kann der Energiespeicher 419 des Läufers 400 mit Energie aufgeladen werden.

In der gezeigten Ausführungsform umfasst die Energieübertragungsstruktur 313 einen Kontaktierungsarm 353 und die am Kontaktierungsarm 353 ausgebildete Übertragungseinheit 317.

In der gezeigten Ausführungsform ist die Übertragungseinheit 317 als eine Stromschiene 323 ausgebildet. Die Übertragungsgegeneinheit 429 des Läufers 400 ist ferner als ein Schleifkontakt 439 ausgebildet.

Der Schleifkontakt 439 ist in der gezeigten Ausführungsform an einem Seitenbereich 445 des Läufers 400 angeordnet.

Durch ein Fahren des Läufers 400 entlang der Stromschiene 323 der Energieübertragungsstruktur 313, bei dem eine Schleifkontaktierung des Schleifkontaktes 439 mit der Stromschiene 323 bewirkt ist, kann somit eine Energieübertragung von der Energieübertragungsstruktur 313 auf den Energiespeicher 419 des Läufers 400 erfolgen und hierdurch die Batterieeinheit 443 des Energiespeichers 419 entsprechend aufgeladen werden.

Die Energieübertragung kann darüber hinaus auch bei Stillstand des Läufer 400 erfolgen, solange eine Kontaktierung der Stromschiene 323 durch den Schleifkontakt 439 hergestellt ist.

Alternativ zu der gezeigten Ausführungsform kann der Schleifkontakt 439 zwei entlang der z-Richtung des gezeigten Koordinatensystems zueinander beabstandete Kontaktelemente aufweisen. Die Stromschiene 323 kann ebenfalls zwei entlang der z-Richtung zueinander beabstandete Schienenelemente umfassen. Die zwei Kontaktelemente sind hierbei derart ausgebildet, dass ein Schienenelement jeweils von genau einem Kontaktelement kontaktiert wird.

In der gezeigten Ausführungsform ist der Kontaktierungsarm 353 geradlinig ausgebildet und senkrecht zu der Statoroberfläche 303 der Statoreinheit 300 erstreckt.

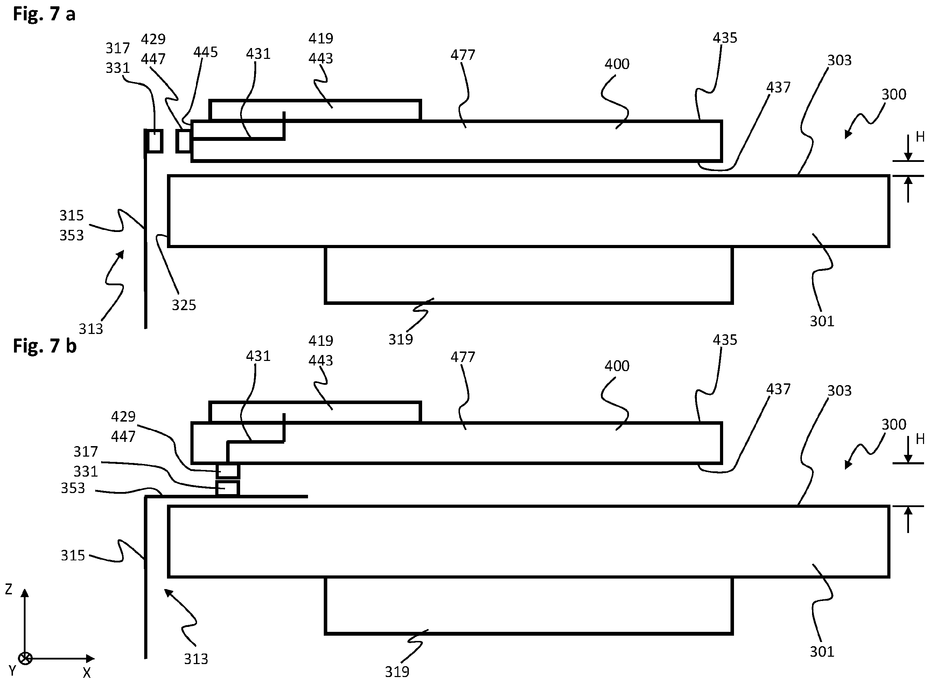

Fig. 7 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

In der gezeigten Ausführungsform sind die Übertragungseinheiten 317 der Energieübertragungsstruktur 313 bzw. die Übertragungsgegeneinheiten 429 des Läufers 400 jeweils als Induktionsspulen 331, 447 ausgebildet.

In Fig. 7 a) ist der Kontaktierungsarm 353 gradlinig ausgebildet und senkrecht zur Statoroberfläche 303 der Statoreinheit 300 orientiert. Die Energieübertragungsstruktur 313 ist wiederum seitlich zum gezeigten Statormodul 301 angeordnet.

Die Übertragungsgegeneinheit 429 des Läufers 400 ist an einem Seitenbereich 445 des Läufers 400 angeordnet.

Alternativ kann die Übertragungsgegeneinheit 429 in einer weiteren Ausführungsform auch auf dem Läufer 400 angeordnet sein. Die Induktionsspule 447 könnte hingegen weiter am Seitenbereich 445 angeordnet sein. Auf dem Läufer 400 könnte somit die Elektronik der Übertragungsgegeneinheit 429 angeordnet sein, die mit der Induktionsspule 447 am Seitenbereich 445 verbunden ist.

Die Induktionsspule 447 des Läufers 400 weist somit vom Seitenbereich 445 des Läufers 400 weg. Die Induktionsspule 331 der Energieübertragungsstruktur 313 weist hingegen zum Seitenbereich 325 der Statoreinheit 300 hin. Die Energieübertragungsposition des Läufers 400 relativ zur Energieübertragungsstruktur 313 ist hierbei dadurch gegeben, dass die beiden Induktionsspulen 331, 447 einander zugewandt sind. Der Läufer 400 fährt hierzu an den Randbereich 325 der Statoreinheit 300 bzw. des Statormoduls 301 und orientiert die Induktionsspule 447 in Richtung der Induktionsspule 331 der Energieübertragungsstruktur 313. Der Läufer 400 kann ferner zur Ausrichtung der Induktionsspulen 331, 447 zueinander eine Variation der Flughöhe H vornehmen.

In der in der Fig. 7 b) gezeigten Ausführungsform ist der Kontaktierungsarm 353 der Energieübertragungsstruktur 313 parallel zur Statoroberfläche 303 des Statormoduls 301 angeordnet. Der Kontaktierungsarm 353 ist somit rechtwinklig zur Basisstruktur 315 der Energieübertragungsstruktur 313 angeordnet.

Die am Kontaktierungsarm 353 angeordnete Induktionsspule 331 ist somit parallel zur Statoroberfläche 303 angeordnet und weist von dieser weg.

In der gezeigten Ausführungsform ist die Induktionsspule 447 des Läufers 400 an der Unterseite 437 des Läufers 400 ausgebildet. In der gezeigten Ausführungsform ist die Induktionsspule 447 wiederum am Seitenbereich 445 des Läufers 400 angeordnet. Zur Energieübertragung ist die Induktionsspule 331 der Energieübertragungsstruktur 313 somit zwischen der Statoreinheit 300 und dem Läufer 400 angeordnet.

Alternativ können auch mehrere Induktionsspulen 447 am Läufer 400, beispielsweise an unterschiedlichen Seitenbereichen 445, ausgebildet sein.

Zur Positionierung des Läufers 400 in der Energieübertragungsposition wird der Läufer somit derart über die Induktionsspule 331 der Energieübertragungsstruktur 313 verfahren, dass eine Übereinanderanordnung der beiden Induktionsspulen 331, 447 zueinander bewirkt ist. Zur Optimierung der kontaktlosen Energieübertragung zwischen den Induktionsspulen 331, 447 kann ferner die Flughöhe H des Läufers 400 variiert werden.

In den in den Fig. 7 a) und Fig. 7 b) gezeigten Ausführungsformen ist die Batterieeinheit 443 des Energiespeichers 419 über die Energieübertragungsverbindung431 mit der Induktionsspule 447 des Läufers 400 verbunden. In den gezeigten Ausführungsformen verläuft die elektrische Verbindung innerhalb der Läuferbasis 477.

Die Energieübertragungsstruktur 313 kann an einer vordefinierten Energieübertragungsposition neben der Statoreinheit 300 angeordnet sein. Zur Energieübertragung wird der Läufer 400 entsprechend in der Energieübertragungsposition positioniert. Eine Energieübertragung von der Energieübertragungsstruktur 313 auf den Läufer 400 findet dann im Stillstand des Läufers 400 statt.

Alternativ kann die Energieübertragungsstruktur 313 über eine vordefinierte Strecke entlang der Statoreinheit 300 angeordnet sein. Die Energieübertragung von der Energieübertragungsstruktur 313 auf den Läufer 400 kann dann erfolgen, während der Läufer 400 an der Energieübertragungsstruktur 313 entlang fährt. Eine Energieübertragung kann aber auch in dieser Ausführungsform in einem Stillstand des Läufers 400 erfolgen.

Die entlang der vordefinierten Strecke angeordnete Energieübertragungsstruktur 313 kann eine Mehrzahl nebeneinander angeordneter Induktionsspulen 331 umfassen. Zur Energieübertragung kann unter Berücksichtigung von Positionsinformationen des Läufers 400, die eine exakte Positionsangabe des Läufers 400 relativ zur Statoreinheit 300 definieren, kann bei Stillstand des Läufers 400 oder während der Fahrt des Läufers 400, die Energieübertragungsspule 331 bestromt werden, zu der der Läufer 400 sich in einem vordefinierten Übertragungsabstand befindet. Der Übertragungsabstand kann in Abhängigkeit der Leistung der jeweiligen Induktionsspulen 331, 447 definiert sein.

Eine Positionsbestimmung des Läufers 400 erfolgt über die Messung des Läufermagnetfelds der Magneteinheit 407 des Läufers 400 durch in der Statoreinheit ausgebildete Magnetfeldsensoren.

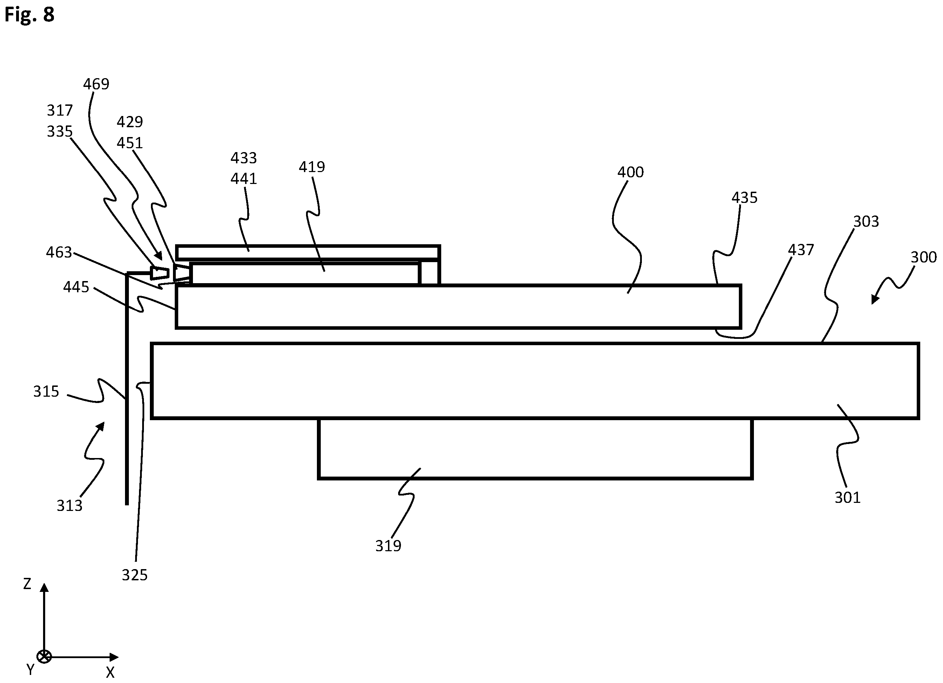

Fig. 8 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

In der gezeigten Ausführungsform ist der Energiespeicher 419 wiederum in den Fixiermechanismus 433 am Läufer 400 angeordnet. Der Fixiermechanismus 433 ist wiederum als Gehäuse 441 ausgebildet. Das Gehäuse 441 umfasst eine Ausgabeöffnung 469. Die Ausgabeöffnung 469 ist am Randbereich 445 des Läufers 400 angeordnet. Am Seitenbereich 463 des Energiespeichers 419 weist der Energiespeicher 419 die Übertragungsgegeneinheit 429 auf.

In der gezeigten Ausführungsform ist die Energieübertragungsstruktur 313 wiederum seitlich zum Seitenbereich 325 der Statoreinheit 300 angeordnet. Die Energieübertragungsstruktur 313 weist die Basisstruktur 315 und den Kontaktierungsarm 353 auf. Die Basisstruktur 315 ist senkrecht zur Statoroberfläche 303 ausgebildet. Der Übertragungsarm 353 ist wiederum senkrecht zur Basisstruktur 315 und demnach parallel zur Statoroberfläche 303 ausgebildet. An einem Ende des Kontaktierungsarms 353 ist die Übertragungseinheit 317 angeordnet.

In der gezeigten Ausführungsform ist die Übertragungseinheit 317 als Stecker-/Buchsenelement ausgebildet. Analog hierzu ist die Übertragungsgegeneinheit 429 als ein Stecker-/Buchsenelement 451 ausgebildet. Die Stecker-/Buchsenelemente 335, 451 sind durch Einführen des Steckerelements in das jeweilige Buchsenelement miteinander koppelbar.

Zum Kontaktieren bzw. Koppeln des Energiespeichers 419 mit der Energieübertragungsstruktur 313 fährt der Läufer 400 somit in die Übertragungsposition, in der ein Koppeln der Stecker-/Buchsenelemente 335, 451 durch Einführen des Steckerelements in das jeweilige Buchsenelement erfolgt. Hierzu kann eine Variation der Flughöhe H des Läufers 400 ausgeführt werden.

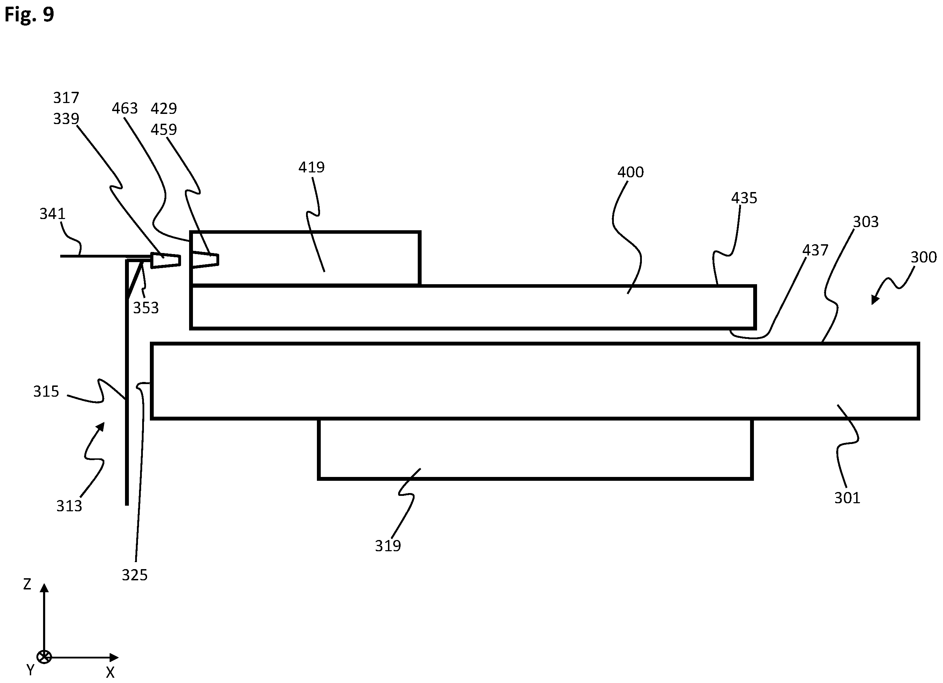

Fig. 9 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

In der gezeigten Ausführungsform ist der Energiespeicher 419 als ein Medientank 457 ausgebildet. Der Medientank dient zur Aufnahme eines energieübertragenden Mediums, wie beispielsweise Kraftstoff, Druckluft oder ähnliche Energie übertragende Medien. Am Medientank 457 ist ferner ein Einführelement 459 ausgebildet. Das Einführelement 459 ist am Seitenbereich 463 des Medientanks 457 ausgebildet.

Die Energieübertragungsstruktur 313 ist vergleichbar zur Energieübertragungsstruktur der Ausführungsform in Fig. 8 seitlich am Seitenbereich 325 des Statormoduls 301 angeordnet. Am parallel zur Statoroberfläche 303 verlaufenden Kontaktierungsarm 353 ist die Übertragungseinheit 317 in Form eines Düsenelements 339 ausgebildet. Das Düsenelement 339 ist mit dem Einführelement 459 koppelbar und ermöglicht eine Übertragung des energieübertragenden Mediums von der Energieübertragungsstruktur 313 in den Medientank 457. Das Düsenelement ist ferner mit einer Versorgungsleitung 341 verbunden, über die das Energie übertragende Medium übertragbar ist.

Analog zu der Ausführungsform in Fig. 8 wird zur Energieübertragung der Läufer 400 in die Übertragungsposition manövriert, in der eine Einführung des Düsenelements 339 in das Einführelement 459 erfolgt.

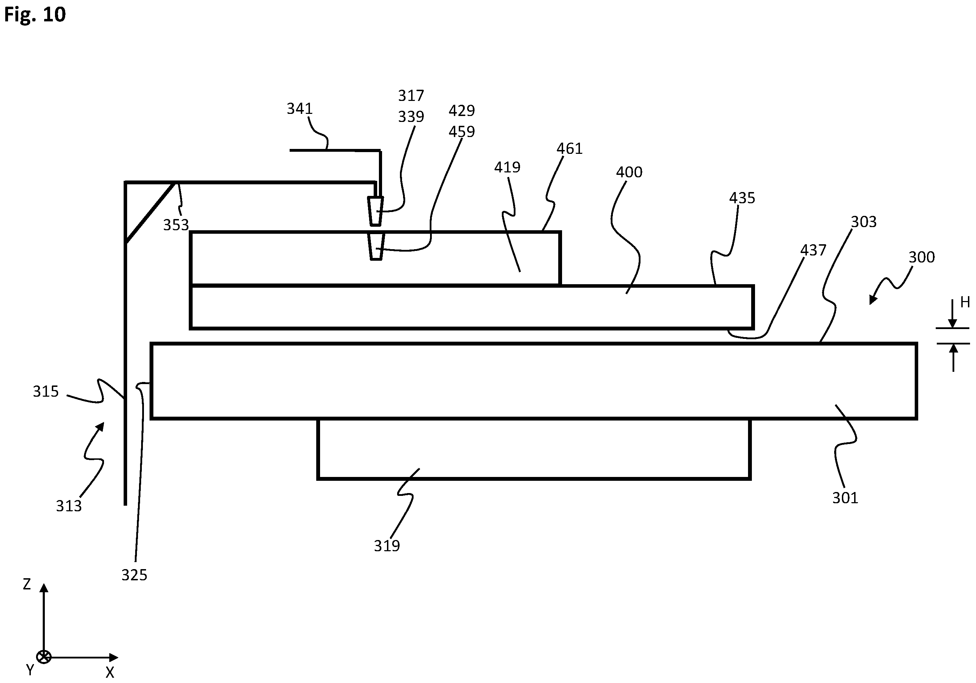

Fig. 10 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

Die gezeigte Ausführungsform basiert auf der Ausführungsform in Fig. 9. Abweichend hierzu ist das Einführungselement 459 an einer Oberseite 461 des Medientanks 457 ausgebildet. Das Düsenelement 339 weist in der gezeigten Ausführungsform in Richtung der Statoroberfläche 303 der Statoreinheit 300. Zur Energieübertragung wird der Läufer in die Übertragungsposition manövriert, in der das Düsenelement 339 dem Einführelement 459 gegenüberliegend angeordnet ist. Durch Variation der Flughöhe H, insbesondere durch Erhöhen der Flughöhe H, wird ein Einführen des Düsenelements 339 in das Einführelement 459 bewirkt.

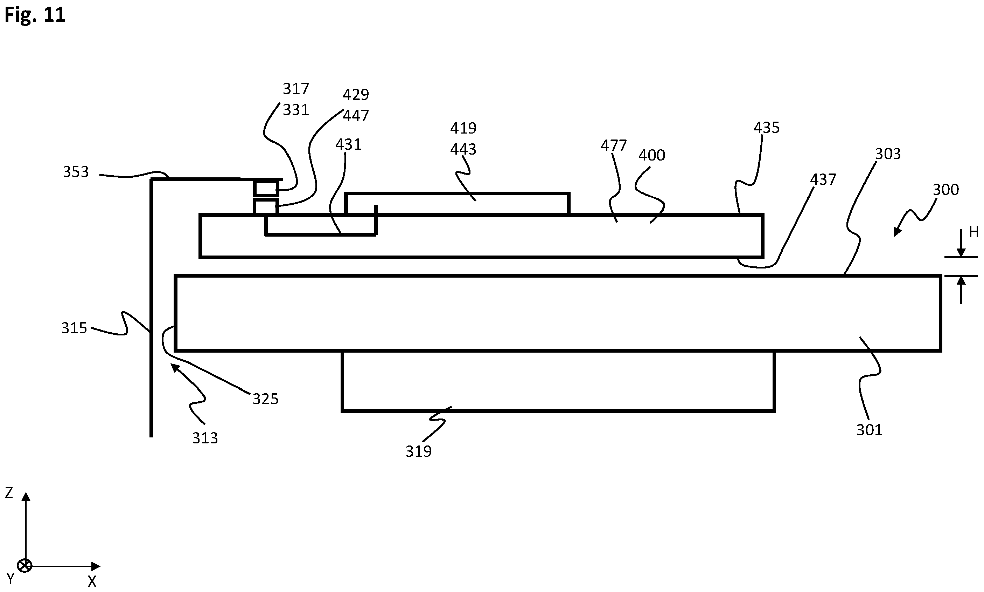

Fig. 11 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

Die gezeigte Ausführungsform basiert auf der Ausführungsform der Fig. 7 b). Abweichend zu der dort gezeigten Ausführungsform ist die Induktionsspule 331 derart am parallel zur Statoroberfläche 303 orientierten Kontaktierungsarm 353 angeordnet, dass die Induktionsspule 331 der Statoroberfläche 303 zugewandt ist. Die Induktionsspule 447 des Läufers 400 ist in der gezeigten Ausführungsform an der Oberseite 435 des Läufers 400 angeordnet.

Zur Energieübertragung ist der Läufer 400 somit zwischen der Statoreinheit 300 und der Induktionsspule 331 der Energieübertragungsstruktur 313 angeordnet. Analog zur Ausführungsform der Fig. 7 b) wird zur Energieübertragung die Position des Läufers derart ausgerichtet, dass eine Übereinanderanordnung der beiden Induktionsspulen 331, 447 erreicht ist. Zur Optimierung der Energieübertragung kann die Flughöhe H variiert, insbesondere erhöht werden.

Alternativ kann das Planarantriebssystem 200 auch eine Mehrzahl von Energieübertragungsstrukturen 313 aufweisen, die an unterschiedlichen Stellen, beispielsweise entlang der Statoreinheit 300, angeordnet sind. Beispielsweise können die mehreren Energieübertragungsstrukturen 313 an gegenüberliegenden Seiten der Statoreinheit 300 ausgebildet sein.

Der Läufer 400 kann somit an unterschiedlichen Stellen auf der Statoreinheit 300 von unterschiedlichen Energieübertragungsstrukturen 313 mit Energie versorgt werden. Alternativ oder zusätzlich kann der Läufer 400 gleichzeitig mehrere Energieübertragungsstrukturen 313 kontaktieren und von diesen Energie beziehen.

Hierzu können beispielsweise unterschiedliche Energieübertragungsstrukturen 313 unterschiedliche Energiearten wie elektrische, thermische, chemische, mechanische Energie bereitstellen. Der Läufer 400 kann hierzu, wie oben erwähnt, entsprechend unterschiedliche Übertragungsgegeneinheiten 429 umfassen, die jeweils zur Übertragung von Energie einer bestimmten Art geeignet sind.

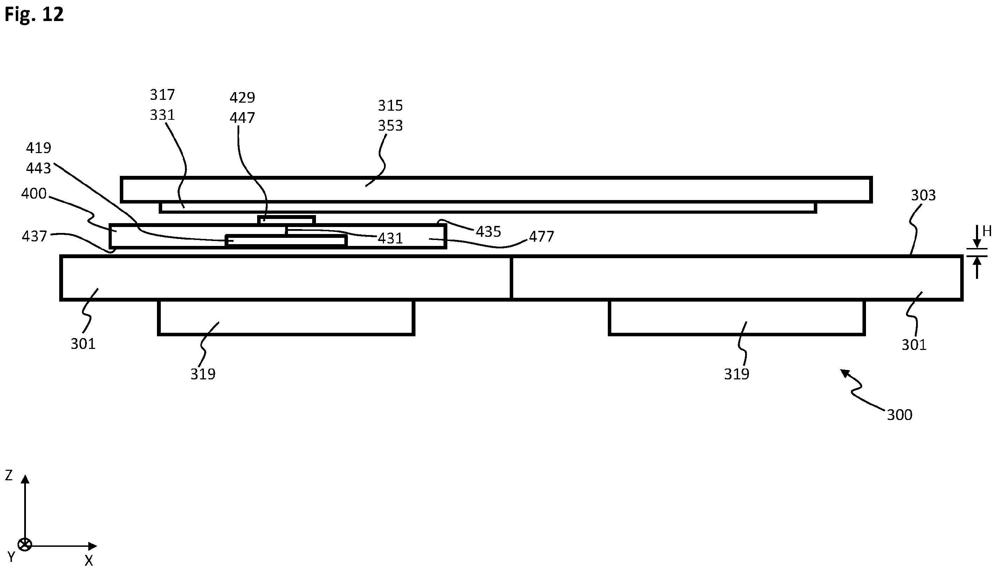

Fig. 12 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

Die Ausführungsform in Fig. 12 basiert auf der Ausführungsform in Fig. 11. Die gezeigte Ausführungsform unterscheidet sich von der Ausführungsform in Fig. 11 dadurch, dass die parallel zur Statoroberfläche 303 ausgebildete Induktionsspule 331 der Energieübertragungsstruktur 313 flächig am Kontaktierungsarm 353 ausgebildet ist. Der Kontaktierungsarm 353 kann hierbei ebenfalls als ein flächiger Kontaktierungsarm ausgebildet sein. Der Läufer 400 ist zur Energieübertragung weiterhin zwischen der Statoroberfläche 303 und der Induktionsspule 331 der Energieübertragungsstruktur 313 angeordnet.

In der gezeigten Ausführungsform muss der Läufer 400 jedoch aufgrund der flächigen Ausbildung der Induktionsspule 331, deren Ausmaße größer als die Ausmaße des Läufers 400 sind, zur Energieübertragung 400 nicht in eine dafür vordefinierte Übertragungsposition gesteuert werden. Stattdessen kann der Läufer 400, wie in Fig. 12 dargestellt, unter der Induktionsspule 331 der Energieübertragungsstruktur 313 hinweggefahren werden. Während des Fahrens des Läufers 400 erfolgt über die kontaktlose Energieübertragung zwischen den einander zugewandten Induktionsspulen 331, 447 die entsprechende Energieübertragung von der Energieübertragungsstruktur 313 auf den Läufer 400. In der gezeigten Ausführungsform ist der Energiespeicher 419 in Form der Batterieeinheit 443 im Inneren der Läuferbasis 477 angeordnet.

Die Energieübertragungsstruktur 313 kann in der gezeigten Ausführungsform beispielsweise an einer Deckenstruktur oder an einer Aufhängungsstruktur oberhalb der Statoreinheit 300 angeordnet sein. Die derart ausgebildete Energieübertragungsstruktur 313 kann wenigstens teilweise die Statoroberfläche 303 der Statoreinheit 300 überdecken. Alternativ hierzu kann die Energieübertragungsstruktur 313 die gesamte Statoroberfläche 303 überdecken.

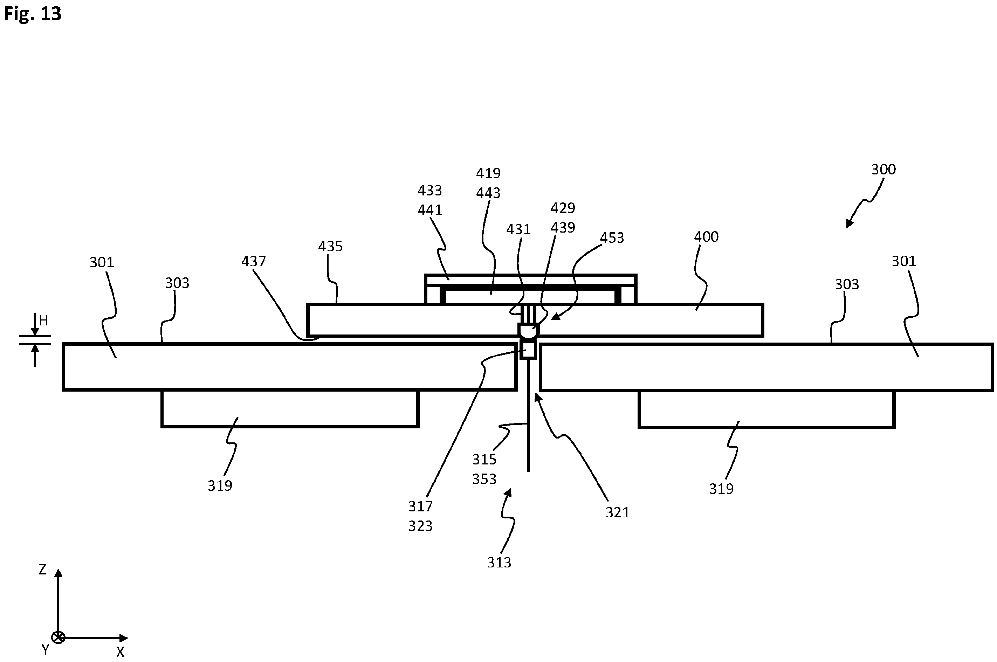

Fig. 13 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

Die gezeigte Ausführungsform basiert auf der Ausführungsform in Fig. 6. Abweichend hierzu ist in der gezeigten Ausführungsform die Energieübertragungsstruktur 313 nicht seitlich neben der Statoreinheit 300, sondern mittig in der Statoreinheit 300 zwischen zwei aneinander angrenzenden Statormodulen 301 angeordnet. Hierzu ist zwischen den aneinander angrenzenden Statormodulen 301 ein Spalt 321 ausgebildet. In dem Spalt 321 ist der Kontaktierungsarm 353 und die daran angeordnete Stromschiene 323 angeordnet. Die Stromschiene 323 ist hierbei auf Höhe der Statoroberfläche 303 der Statormodule 301 positioniert.

In der gezeigten Ausführungsform ist der Schleifkontakt 439 der Übertragungsgegeneinheit 429 an der Unterseite 437 des Läufers 400 ausgebildet. Der Schleifkontakt 439 ist somit der an der Statoroberfläche 303 angeordneten Stromschiene 323 zugewandt. Die Stromschiene verläuft hierbei entlang einer Y-Richtung des dargestellten Koordinatensystems.

Durch das Überfahren der Stromschiene 323 durch den Läufer 400 kann somit eine Kontaktierung zwischen der Stromschiene 323 und dem Schleifkontakt 439 bewirkt werden, wodurch eine Energieübertragung von der Energieübertragungsstruktur 313 an den Energiespeicher 419 erfolgt.

Der Läufer 400 kann hierbei solange entlang der Stromschiene 323 fahren, bis genug Energie übertragen worden ist.

Zur Kontaktierung der Stromschiene 323 durch den Schleifkontakt 439 kann beim Überfahren der Stromschiene 323 durch den Läufer 400 ferner die Flughöhe H des Läufers 400 reduziert werden. Hierdurch kann erreicht werden, dass ausschließlich durch die Reduzierung der Flughöhe H eine Kontaktierung mit der Stromschiene 323 erfolgt und somit ausschließlich dann eine Energieübertragung bewirkt wird, wenn eine solche vorgesehen ist. Beim Überfahren der Stromschiene 323 mit einer erhöhten Flughöhe H erfolgt hingegen keine Energieübertragung.

Die Flughöhe H ist in der gezeigten Abbildung zwischen der Statoroberfläche 303 und der Unterseite 437 des Läufers definiert. Alternativ hierzu kann die Flughöhe H zwischen der Statoroberfläche 303 und der Oberseite 435 des Läufers definiert sein. Alternativ hierzu kann die Flughöhe H zwischen der Statoroberfläche 303 und einem Zentrum zwischen der Oberseite 435 und der Unterseite 437 des Läufers 400 oder einem beliebigen anderen räumlichen Punkt im Verhältnis zum Läufer 400 definiert sein.

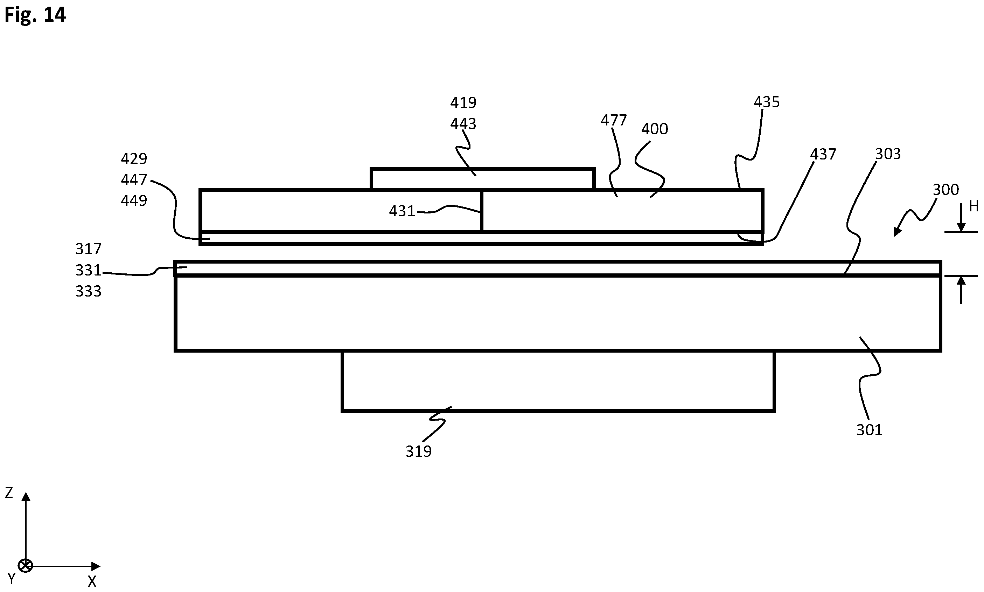

Fig. 14 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

In der gezeigten Ausführungsform sind die Induktionsspulen der vorangegangenen Ausführungsformen jeweils als Induktionsschichten 449, 333 ausgebildet. Die Induktionsschicht 333 der Energieübertragungsstruktur 313 ist hierbei in der gezeigten Ausführungsform an der Statoroberfläche 303 der Statoreinheit 300 angeordnet. In der gezeigten Ausführungsform ist die gesamte Statoroberfläche 303 des gezeigten Statormoduls 301 durch die Induktionsschicht 333 bedeckt. Die Induktionsschicht 449 des Läufers 400 ist hingegen an der Unterseite 437 des Läufers 400 ausgebildet. In der gezeigten Ausführungsform ist die gesamte Unterseite 437 des Läufers 400 durch die Induktionsschicht 449 bedeckt.

Zur Energieübertragung von der Energieübertragungsstruktur 313, die in der gezeigten Ausführungsform lediglich durch die Induktionsschicht 333 gebildet ist, muss der Läufer 400 somit lediglich über die Induktionsschicht 333 hinwegfahren. Eine vordefinierte Energieübertragungsposition ist in der gezeigten Ausführungsform somit nicht notwendig. Zur Optimierung der Energieübertragung kann wiederum die Flughöhe H des Läufers 400 variiert werden.

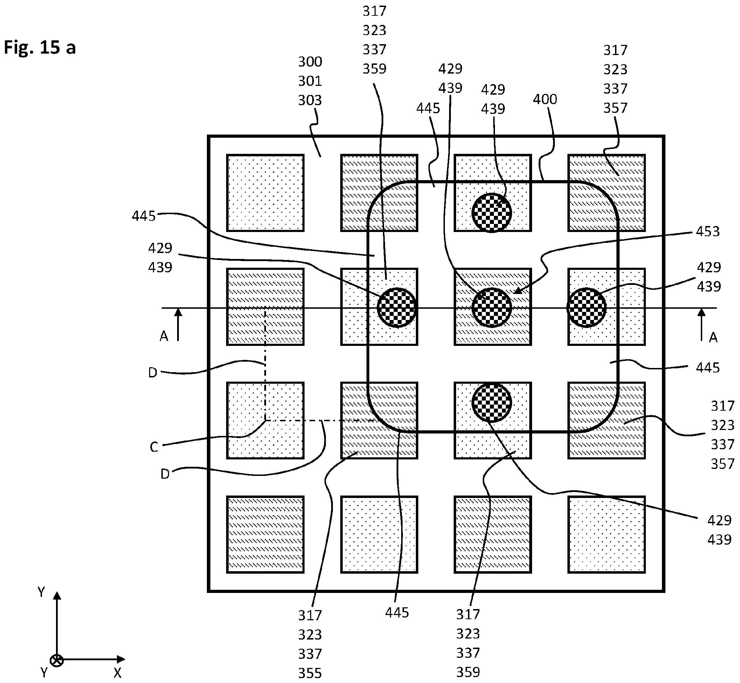

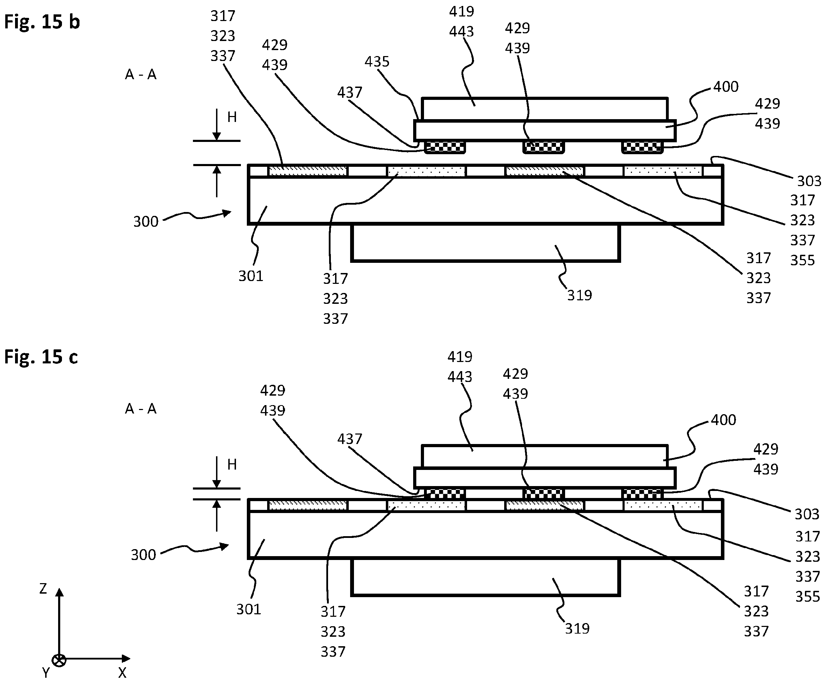

Fig. 15 zeigt eine weitere schematische Darstellung eines Planarantriebssystems 200 mit einer Statoreinheit 300, einem Läufer 400 und einer Energieübertragungsstruktur 313 gemäß einer weiteren Ausführungsform.

Die Ausführungsform in Fig. 15 basiert auf der Ausführungsform in Fig. 13. Die Stromschiene 323 ist wiederum auf Höhe der Statoroberfläche 303 der Statoreinheit angeordnet. In der gezeigten Ausführungsform weicht die Ausbildung der Stromschiene 323 jedoch von der Ausbildung in Fig. 13 dadurch ab, dass die Stromschiene 323 als eine Art flächige Stromschienenfolie 355 ausgebildet ist und aus einer Mehrzahl von voneinander getrennten Kontaktierungselementen 337 besteht. Die Kontaktierungselemente 337 sind in der gezeigten Ausführungsform entsprechend der Fig. 15 a) rechteckig ausgebildet und gleichmäßig über die gesamte Fläche des gezeigten Statormoduls 301 beabstandet zueinander verteilt.

Die Kontaktierungselemente 337 können hierbei jeweils einen elektrischen + Pol oder einen elektrischen - Pol umfassen.

In der gezeigten Ausführungsform sind die Kontaktierungselemente 337 jeweils als + Pol Kontaktierungselement 357 oder als - Pol Kontaktierungselement 359 ausgebildet, wobei die + Pol Kontaktierungselemente 357 jeweils einen elektrischen + Pol bilden und die - Pol Kontaktierungselement 359 jeweils einen elektrischen - Pol bilden. In der gezeigten Ausführungsform sind die + Pol Kontaktierungselemente 357 und die - Pol Kontaktierungselemente 359 jeweils derart zu einander beabstandet angeordnet, dass in einer beliebigen Position des Läufers 400 auf der Statoreinheit 300 der Läufer 400 jeweils wenigstens ein + Pol Kontaktierungselement 357 und wenigstens ein - Pol Kontaktierungselement 359 kontaktiert.

Die + Pol Kontaktierungselemente 357 sind in Fig. 15a mit strichlinierter Musterung und die - Pol Kontaktierungselement 359 mit gepunkteter Musterung gekennzeichnet.

Alternativ zu der gezeigten Ausführungsform können auch jeweils ein + Pol Kontaktierungselement 357 und ein - Pol Kontaktierungselement 359 in einem Kontaktierungselement 337 zusammengefasst sein.

In der gezeigten Ausführungsform weist der Läufer 400 ferner fünf Schleifkontakte 439 auf. Die Schleifkontakte 439 sind, wie dies in Fig. 15 b) und Fig. 15 c) dargestellt ist, von der Unterseite 437 hervorstehend an den Läufer 400 derart ausgebildet, dass diese der Statoroberfläche 303 zugewandt sind. Die Schleifkontakte 439 weisen ebenfalls jeweils einen + Pol und einen - Pol auf.

Wie in Fig. 15 a) aufgrund einer transparenten Darstellung des Läufers 400 zu erkennen, sind vier der fünf Schleifkontakte 439 an den jeweils paarweise einander gegenüberliegenden Seitenbereichen 445 des rechteckig ausgebildeten Läufers 400 angeordnet. Ein fünfter Schleifkontakt 439 ist hingegen in einem Zentrum 453 des Läufers angeordnet. In der gezeigten Position kontaktiert der im Zentrum 453 des Läufers 400 angeordnete Schleifkontakt 439 ein + Pol Kontaktierungselement 357. Die an den Seitenbereichen 445 angeordneten Schleifkontakte 439 kontaktieren hingegen jeweils ein - Pol Kontaktierungselement 359.

Durch die simultane Kontaktierung von wenigstens einem + Pol Kontaktierungselement 357 und wenigstens einem - Pol Kontaktierungselement 359 durch jeweils einen Schleifkontakt 439 ist eine optimale Energieübertragung auf den Läufer 400 ermöglicht.

In Fig. 15 a) ist ferner dargestellt, dass die Kontaktierungselemente 337 der Stromschiene 323 in einem Abstand D relativ zueinander angeordnet sind. Die Abstände D sind hierbei zwischen Zentren C jeweils zweier unmittelbar zueinander beabstandeter Kontaktierungselemente 337 definiert.

Die Abstände D zwischen den Kontaktierungselementen 337 können hierbei derart definiert sein, dass bei einer Mehrzahl von Ladepositionen des Läufers relativ zur Statoreinheit 300 wenigstens ein Schleifkontakt 439 wenigstens ein Kontaktierungselement 337 der Stromschiene 323 kontaktiert. Die Abstände D sind somit auf die Größenverhältnisse des Läufers 400 bzw. die Anordnungen der Schleifkontakte 439 am Läufer 400 angepasst. In einer Ladeposition ist hierbei gewährleistet, dass durch die Schleifkontakte 439 des Läufers 400 wenigstens ein + Pol Kontaktierungselement 357 und wenigstens ein - Pol Kontaktierungselement 359 kontaktiert werden.

Wie bereits zur Ausführungsform in Fig. 13 beschrieben, kann durch Variieren der Flughöhe H, insbesondere durch ein Reduzieren der Flughöhe H eine Schleifkontaktierung zwischen den Schleifkontakten 439 des Läufers 400 und den Kontaktierungselementen 337 der Stromschiene 323 der Statoreinheit 300 bewirkt werden.

So zeigt die Fig. 15 b) den Läufer 400 in einer Flughöhe H, die derart bemessen ist, dass keine Schleifkontaktierung erfolgt. Wohingegen die Fig. 15 c) den Läufer 400 mit einer geringeren Flughöhe H zeigt, bei dem es zu einer Schleifkontaktierung zwischen den Kontaktierungselementen 337 und den Schleifkontakten 439 kommt. Diese Schleifkontaktierung kann insbesondere während des Verfahrens, sprich des Bewegens, des Läufers 400 relativ zur Statoreinheit 300 bewirkt werden.

Eine Energieübertragung findet dabei jedes Mal dann statt, wenn die Schleifkontakte 439 des Läufers 400 sowohl wenigstens ein + Pol Kontaktierungselement 357 und wenigstens ein - Pol Kontaktierungselement 359 kontaktieren. In den Positionen des Läufers 400, in denen die Schleifkontakte 439 nicht gleichzeitig wenigstens ein + Pol Kontaktierungselement 357 und wenigstens ein - Pol Kontaktierungselement 359 kontaktieren, findet hingegen keine Energieübertragung statt.

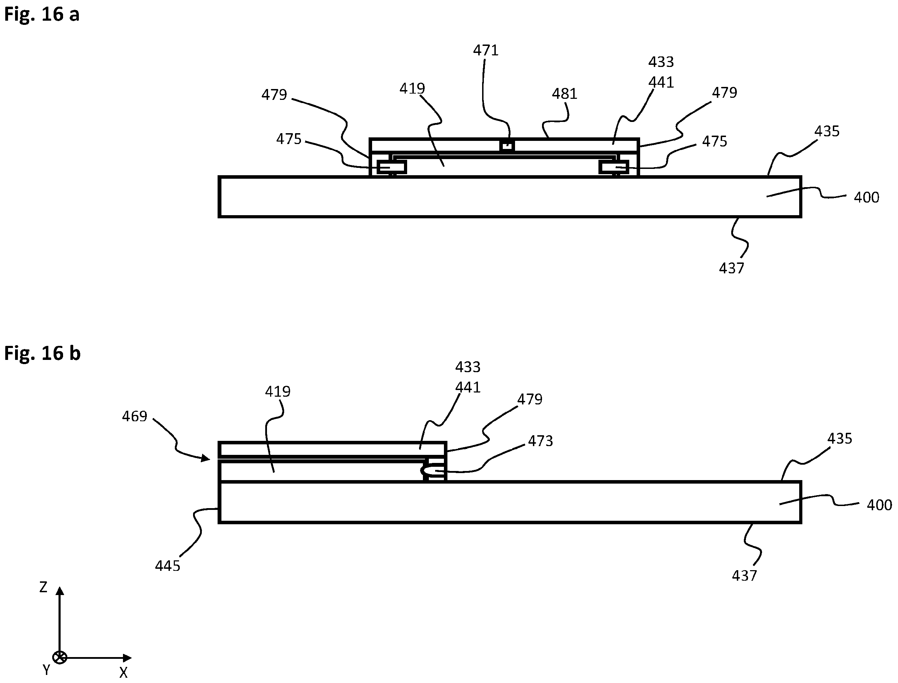

Fig. 16 zeigt eine weitere schematische Darstellung eines Läufers 400 mit einem Energiespeicher 419 gemäß einer weiteren Ausführungsform.

In der gezeigten Ausführungsform ist Energiespeicher über den Fixiermechanismus 433 am Läufer 400 lösbar angeordnet. Der Fixiermechanismus 433 in den in den Fig. 16 a) und Fig. 16 b) dargestellten Ausführungsformen als Gehäuse 441 ausgebildet. An Seitenbereichen 479 des Gehäuses 441 sind Rastelemente 475 ausgebildet, über die der Energiespeicher 419 im Gehäuse 441 verrastet ist. An einem Deckenbereich 481 ist ferner ein Auslöseelement 471 ausgebildet. Das Auslöseelement 471 kann die Verrastung des Energiespeichers 419 über die Rastelemente 475 im Gehäuse 441 lösen, sodass der Energiespeicher 419 vom Gehäuse 441 entfernbar ist.

In Fig. 16 b) weist das Gehäuse 441 die Gehäuseöffnung 469 auf. Das Rastelement 475 ist im Seitenbereich 479 der Gehäuseöffnung 469 gegenüberliegend angeordnet. Durch Lösen der Verrastung kann der Energiespeicher 419 durch die am Seitenbereich 445 des Läufers 400 angeordnete Gehäuseöffnung 469 aus dem Gehäuse 441 und somit vom Läufer 400 entfernt werden.

Der Energiespeicher 419, oder ein weiterer baugleich ausgestalteter Energiespeicher, kann entsprechend über den Fixiermechanismus 433 am Läufer 400 angeordnet und fixiert werden, indem der Energiespeicher 419 in den Fixiermechanismus 433 eingeführt und dort fixiert wird.

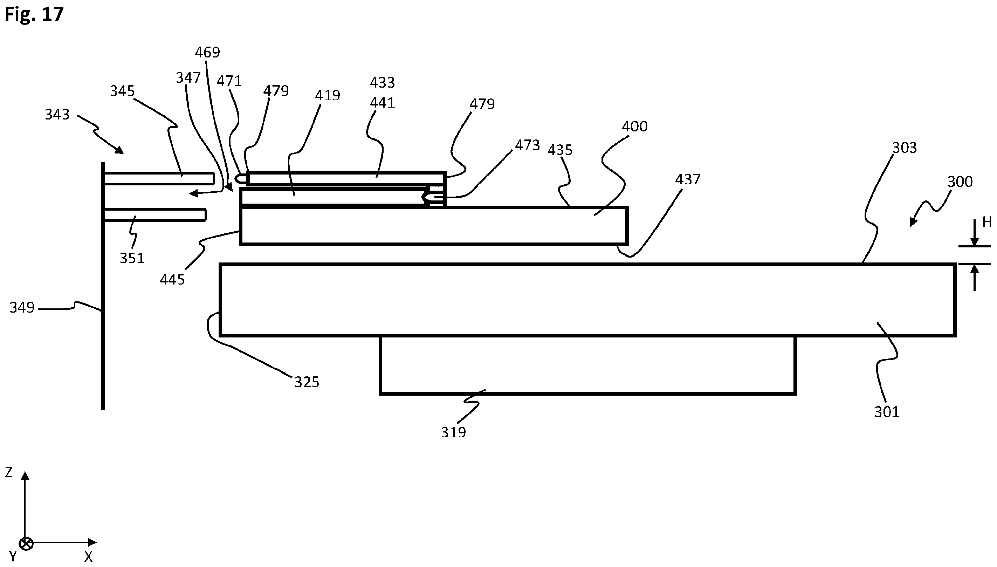

Fig. 17 zeigt eine schematische Darstellung eines Planarantriebssystems 200 mit einer Statoreinheit 300, einem Läufer 400 und einer Auslösestruktur 343 gemäß einer Ausführungsform.

Die gezeigte Ausführungsform basiert auf der Ausführungsform der Fig. 16 b). In der gezeigten Ausführungsform weist der Fixiermechanismus 433 an dem Seitenbereich 479 der Gehäuseöffnung 469 das bereits erwähnte Auslöseelement 471 auf. Analog zur Ausführungsform in Fig. 16 b) weist das Gehäuse 441 an dem der Gehäuseöffnung 469 gegenüberliegenden Seitenbereich 479 das bereits erwähnte Auswurfelement 473 auf. Das Auswurfelement 473 kann beispielsweise durch ein Federelement ausgebildet sein. Durch Aktivieren des Auslöseelements 471 wird das Auswurfelement 473 aktiviert und der Energiespeicher 419 aus dem Gehäuse 441 ausgeworfen.

In der gezeigten Ausführungsform weist das Planarantriebssystem 200 ferner eine Auslösestruktur 343 auf. Die Auslösestruktur 343 ist seitlich am Seitenbereich 325 des gezeigten Statormoduls 301 angeordnet. Die Auslösestruktur 343 umfasst eine Auslösebasisstruktur 349, die senkrecht zur Statoroberfläche 303 angeordnet ist. Senkrecht zur Auslösebasisstruktur 349 weist die Auslösestruktur 343 ferner einen Aktivierungsvorsprung 345 auf. Der Aktivierungsvorsprung 345 ist senkrecht zur Auslösebasisstruktur 349 und damit parallel zur Statoroberfläche 303 angeordnet. Zum Aktivierungsvorsprung 345 beabstandet weist die Auslösestruktur 343 einen Bodenbereich 351 auf. Zwischen dem Aktivierungsvorsprung 345 und dem Bodenbereich 351 ist ein Aufnahmebereich 347 definiert.

Zum Auslösen bzw. Auswerfen des Energiespeichers 419 wird der Läufer 400 in eine Auswurfposition relativ zur Auslösestruktur 343 manövriert. In der Auswurfposition kontaktiert der Auslösevorsprung 345 das Auslöseelement 471 des Fixiermechanismus 433. Durch Auslösen des Auslöseelements 471 wird das Auswurfelement 473 aktiviert und der Energiespeicher 419 über die Gehäuseöffnung 469 in den Aufnahmebereich 347 der Auslösestruktur 343 ausgeworfen.

Der Energiespeicher 419 kann somit lediglich durch Manövrieren des Läufers in die dafür vorgesehene Position und durch das dadurch bedingte Angrenzen des Auslösevorsprungs 345 an das Auslöseelement 471 aus dem Fixiermechanismus 433 entfernt und somit vom Läufer 400 an die Auslösestruktur 343 übergeben werden. Die gezeigte Ausgestaltung der Auslösestruktur 343 ist lediglich beispielhaft.

Der Kerngedanke der gezeigten Ausführungsform ist der, dass das Entfernen des Energiespeichers 419 vom Läufer 400 ausschließlich durch das Manövrieren des Läufers 400 in eine dafür vorgesehene Position erfolgt. Ein aktives Entfernen des Energiespeichers 419 vom Läufer 400 durch Ansteuern entsprechender beweglicher Komponenten kann hierüber vermieden werden.

Der Energiespeicher 419 oder ein baugleicher weiterer Energiespeicher kann über den Fixiermechanismus 433 am Läufer 400 angeordnet und fixiert werden, indem der Energiespeicher 419 entsprechend in den Fixiermechanismus 433 eingeschoben und in diesem fixiert wird.

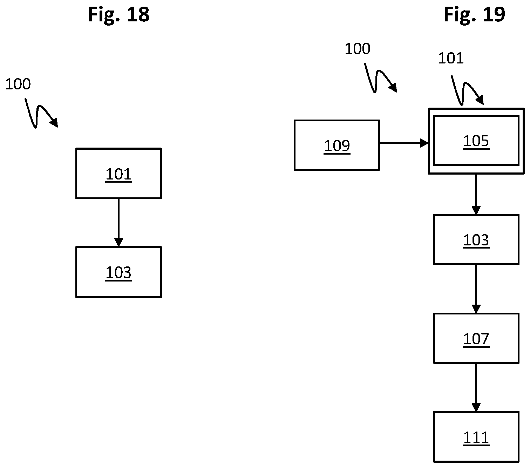

Fig. 18 zeigt ein Flussdiagramm eines Verfahrens 100 zur Energieübertragung auf einen Läufer 400, 423 eines Planarantriebssystems 200 gemäß einer Ausführungsform.

In der gezeigten Ausführungsform werden zur Energieübertragung auf einen Läufer 400 in einem ersten Ausgabeschritt 101 durch die Steuereinheit 201 an wenigstens eine Spulengruppe der Statoreinheit 300 Steuersignale zum Positionieren des Läufers 400 in eine Energieladeposition relativ zur Energieübertragungsstruktur 313 ausgegeben. Die Energieladeposition ist hierbei dadurch ausgezeichnet, dass eine Kopplung zwischen der Übertragungseinheit 317 der Energieübertragungsstruktur 313 und der Übertragungsgegeneinheit 429 des Läufer 400 und damit eine Energieübertragung von der Energieübertragungsstruktur 313 auf den Läufer 400 ermöglicht ist.

In einem zweiten Ausgabeschritt 103 werden durch die Steuereinheit 201 Steuersignale an die Energieübertragungsstruktur 313 ausgebeben. Durch die Steuersignale wird die Energieübertragungsstruktur 313 zum Übertragen der Energie auf den Läufer 400 angesteuert.

Die Steuereinheit 201 kann hierbei die zu übertragende Energiemenge und/oder Energieart regeln.

Die Steuereinheit 201 kann hierzu als eine zentrale Steuereinheit ausgebildet sein, die das Fahren der Läufer 400, 423 steuert und zusätzlich die durch die Prozessvorrichtungen 427 ausgeführten Prozesse steuert oder zumindest überwacht. Die Steuereinheit 201 ist somit über die zur Ausführung der jeweiligen Prozesse benötigten und den Läufern 400, 423 zur Verfügung stehenden Energiemengen informiert.

Alternativ oder zusätzlich können die Läufer 400, 423 eingerichtet sein, aktiv mit der Steuereinheit 201 zu kommunizieren und der Steuereinheit 201 mitzuteilen, dass zur Ausführung eines bestimmten Prozesses eine bestimmte Energiemenge benötigt wird und/oder dass zur Ausführung eines bestimmten Prozesses eine vorhandene Energiemenge nicht ausreicht.

Der Läufer 400 kann somit der Steuereinheit 201 und/oder der Energieübertragungsstruktur 313 die zu übertragende Energiemenge anzeigen.

Fig. 19 zeigt ein Flussdiagramm des Verfahrens 100 zur Energieübertragung auf einen Läufer 400, 423 eines Planarantriebssystem 200 gemäß einer weiteren Ausführungsform.

Die gezeigte Ausführungsform basiert auf der Ausführungsform in Fig. 18 und umfasst alle dort beschriebenen Verfahrensschritte.

In der gezeigten Ausführungsform umfasst der erste Ausgabeschritt 101 einen dritten Ausgabeschritt 105.

Im dritten Ausgabeschritt 105 werden von der Steuereinheit 201 Steuersignale an wenigstens eine Spulengruppe zum Variieren der Flughöhe H des Läufers 400 in der Energieübertragungsposition und zum Kontaktieren der Übertragungseinheit 317 der Energieübertragungsstruktur 313 durch die Übertragungsgegeneinheit 429 des Läufers 400 ausgegeben.

Gemäß den oben beschriebenen Ausführungsformen kann die Flughöhe H je nach Ausbildung der Energieübertragungsstruktur 313 zum Kontaktieren der Übertragungs- bzw. Übertragungsgegeneinheiten 319, 429 erhöht oder erniedrigt werden. Die Flughöhe H kann durch ein entsprechendes Ansteuern der Statormagnetfelder variiert werden.

In der gezeigten Ausführungsform kann ferner zum Entfernen des Energiespeichers 419 vom Läufer 400 in einem fünften Ausgabeschritt 109 eine Ausgabe entsprechender Steuersignale durch die Steuereinheit an wenigstens eine Spulengruppe zum Steuern des Läufers 400 in eine Auswurfposition erfolgen. In der Auswurfposition ist der Läufer 400 derart relativ zu der oben beschriebenen Auslösestruktur 343 positioniert, dass der Aktivierungsvorsprung 345 der Auslösestruktur 343 an das Auslöseelement 471 des Fixiermechanismus 433 des Läufers 400 angrenzt und hierüber das Auswurfelement 473 des Fixiermechanismus 433 aktiviert wird. Durch das Aktivieren des Auswurfelements 473 wird der Energiespeicher 419 automatisch aus dem Fixiermechanismus 433 ausgeworfen und durch den Aufnahmebereich 347 der Auslösestruktur 343 aufgenommen.

Der fünfte Ausgabeschritt 109 und das Auswerfen des Energiespeichers 419 kann vor dem ersten Ausgabeschritt 101 ausgeführt werden. Hierbei wird ein Auswechseln des Energiespeichers 419 beschrieben. Hierzu wird vor dem Ausführen der Energieübertragung auf dem Läufer 400 zunächst ein neuer Energiespeicher 419 installiert.

Alternativ kann der neu installierte Energiespeicher 419 bereits mit Energie befüllt sein, beispielsweise als eine geladene Batterieeinheit. Dann kann das Auswechseln des Energiespeichers alternativ zum Ausführen der Energieübertragung von der Energieübertragungsstruktur 313 auf den Läufer 400 erfolgen.

Alternativ oder zusätzlich kann eine Energieübertragung auch zwischen zwei Läufern 400, 423 erfolgen.

Hierzu werden in einem vierten Ausgabeschritt 107 zunächst durch die Steuereinheit 201 an wenigstens eine Spulengruppe der Statoreinheit 300 Steuersignale zum Positionieren des Läufers 400 in eine Übertragungsposition relativ zu einem weiteren Läufer 423 des Planarantriebssystems 200 und zum Kontaktieren des Energieübertragungselements 421 mit dem Energieübertragungsgegenelement 425 des weiteren Läufers 423 und zum Übertragen der zum Ausführen der Prozessvorrichtung 427 benötigten Energiemenge an den weiteren Läufer 423 ausgegeben.

Wie oben beschrieben, ist die Übertragungsposition hierbei nicht durch eine explizite Position der Läufer 400, 423 relativ zur Statoreinheit 300 definiert. Die Übertragungsposition ist durch eine relative Position der beiden Läufer 400, 423 zueinander definiert und durch die Kopplung der Übertragungs- bzw. Übertragungsgegenelemente 421, 425 der beiden Läufer 400, 423 gekennzeichnet.

In einem Übertragungsschritt 111 wird darauffolgend eine Energieübertragung vom Läufer 400 an den weiteren Läufer 423 oder vom weiteren Läufer 423 an den Läufer 400 ausgeführt. Der weitere Läufer 423 kann hierzu ebenfalls mit einem Energiespeicher 419 versehen sein.

Die Energieübertragung kann durch die Steuereinheit 201 gesteuert werden, indem die Steuereinheit 201 entsprechende Steuersignale an die Läufer 400, 423 ausgibt, die eine Energieübertragung bewirken.

Alternativ kann die Energieübertragung durch die Läufer 400, 423 selbstständig gesteuert werden. Die Läufer 400, 423 können hierzu jeweils Kommunikationseinheit und eine Steuereinheit umfassen, durch die eine Datenkommunikation zwischen den Läufern 400, 423 ausgeführt werden kann, in der beispielsweise die zu übertragene Energiemenge und/oder Energieart kommuniziert wird, und die Energieübertragung selbstständig durch die Läufer 400, 423 gesteuert wird.

### Bezugszeichenliste

- 100: Verfahren
- 101: erster Ausgabeschritt
- 103: zweiter Ausgabeschritt
- 105: dritter Ausgabeschritt
- 107: vierter Ausgabeschritt
- 109: fünfter Ausgabeschritt
- 111: Übertragungsschritt

- 200: Planarantriebssystem
- 201: Steuereinheit
- 203: Datenverbindung

- 300: Statoreinheit
- 301: Statormodul
- 303: Statoroberfläche
- 305: Statormodulgehäuse
- 307: Anschlussleitung
- 308: Statorsegment
- 309: Statorleiter
- 311: Kontaktstruktur
- 313: Energieübertragungsstruktur
- 315: Basisstruktur
- 317: Übertragungseinheit
- 319: Statorbasis
- 321: Spalt
- 323: Stromschiene
- 325: Seitenbereich der Statoreinheit
- 327: Prozessvorrichtung
- 329: Schleifkontakt
- 331: Induktionsspule
- 333: Induktionsschicht
- 335: Stecker-/Buchsenelement
- 337: Kontaktierungselement
- 339: Düsenelement
- 341: Versorgungsleitung
- 343: Auslösestruktur
- 345: Aktivierungsvorsprung
- 347: Aufnahmebereich
- 349: Auslösebasisstruktur
- 351: Bodenbereich
- 353: Kontaktierungsarm
- 355: Stromschienenfolie
- 357: + Pol Kontaktierungselement
- 359: - Pol Kontaktierungselement

- 400: Läufer
- 401: Magnetanordnung
- 403: Freifläche
- 405: Befestigungsstruktur
- 407: Magneteinheit
- 409: Magnetelement
- 411: erste X-Magneteinheit
- 413: zweite X-Magneteinheit
- 415: erste Y-Magneteinheit
- 417: zweite Y-Magneteinheit
- 419: Energiespeicher
- 421: Energieübertragungselement
- 423: weiterer Läufer
- 425: Energieübertragungsgegenelement
- 427: Prozessvorrichtung
- 429: Übertragungsgegeneinheit
- 431: Energieübertragungsverbindung
- 433: Fixiermechanismus
- 435: Oberseite
- 437: Unterseite
- 439: Schleifkontakt
- 441: Gehäuse
- 443: Batterieeinheit
- 445: Seitenbereich des Läufers
- 447: Induktionsspule
- 449: Induktionsschicht
- 451: Stecker-/Buchsenelement
- 453: Zentrum
- 455: Umrandungsstruktur
- 457: Medientank
- 459: Einführelement
- 461: Oberseite des Energiespeichers
- 463: Seitenbereich des Energiespeichers
- 465: weiterer Energiespeicher
- 467: weitere Energieübertragungsverbindung
- 469: Ausgabeöffnung
- 471: Auslöseelement
- 473: Auswurfelement
- 475: Rastelement
- 477: Läuferbasis
- 479: Seitenbereich
- 481: Deckenbereich

- 500: Sensormodul
- 501: Magnetfeldsensor

- D: Abstand
- H: Flughöhe
- C: Zentrum

## Patentansprüche

1. Planarantriebssystem (200), wobei das Planarantriebssystem (200) eine Statoreinheit (300) mit einer Mehrzahl von Spulengruppen (321) zum Erzeugen eines Statormagnetfelds und wenigstens einen Läufer (400) mit einer Mehrzahl von Magneteinheiten (410) zum Erzeugen eines Läufermagnetfelds umfasst, wobei über eine magnetische Kopplung zwischen dem Statormagnetfeld und dem Läufermagnetfeld der Läufer (400) auf der Statoreinheit (300) antreibbar ist, wobei der Läufer (400) einen Energiespeicher (419) aufweist, wobei an der Statoreinheit (300) eine Energieübertragungsstruktur (313) mit einer Übertragungseinheit (317) ausgebildet ist, wobei der Läufer (400) eine mit der Übertragungseinheit (317) koppelbare Übertragungsgegeneinheit (429) umfasst, und wobei bei Kopplung der Übertragungseinheit (317) mit der Übertragungsgegeneinheit (429) eine Energieübertragung von der Energieübertragungsstruktur (313) auf den Läufer (400) bewirkbar ist, wobei der Energiespeicher (419) auf einer Oberseite (435) des Läufers (400) angeordnet oder in eine Umrandungsstruktur (455) des Läufers (400) integriert oder flächig auf einer Läuferbasis (477) des Läufers (400) ausgebildet ist und eine Oberseite (435) des Läufers (400) bildet.

2. Planarantriebssystem (200) nach Anspruch 1, wobei die Energieübertragungsstruktur (313) einen Kontaktierungsarm (353) aufweist, wobei die Übertragungseinheit (317) am Kontaktierungsarm (353) ausgebildet ist, und wobei der Kontaktierungsarm (353) wenigstens teilweise über einer Statoroberfläche (303) der Statoreinheit (300) angeordnet ist.

3. Planarantriebssystem (200) nach Anspruch 1 oder 2, wobei die Übertragungsgegeneinheit (429) seitlich und/oder an einer der Statoroberfläche (303) zugewandten Unterseite (437) und/oder an einer der Unterseite (437) gegenüberliegenden Oberseite (435) des Läufers (400) ausgebildet ist, und/oder wobei die Übertragungseinheit (317) und die Übertragungsgegeneinheit (429) Induktionsspulen (331, 447) umfassen.

4. Planarantriebssystem (200) nach einem der voranstehenden Ansprüche, wobei die Übertragungseinheit (317) und die Übertragungsgegeneinheit (429) jeweils eine Induktionsschicht (333, 449) umfassen, wobei die Übertragungseinheit (317) an der Statoroberfläche (303) der Statoreinheit (300) angeordnet ist, und wobei die Übertragungsgegeneinheit (429) an einer der Statoroberfläche (303) zugewandten Unterseite (437) des Läufers (400) ausgebildet ist, und/oder wobei die Übertragungseinheit (317) eine Stromschiene (323) umfasst, wobei die Übertragungsgegeneinheit (429) einen Schleifkontakt (439) umfasst.

5. Planarantriebssystem (200) nach Anspruch 6, wobei die Stromschiene (323) in einer Statoroberfläche (303) der Statoreinheit (300) ausgebildet ist, und wobei der Schleifkontakt (439) an einer der Statoroberfläche (303) zugewandten Unterseite des Läufers (400) ausgebildet ist, und/oder wobei die Stromschiene (323) eine Mehrzahl von Kontaktierungselementen (337) umfasst, wobei die Kontaktierungselemente (337) in vorbestimmten Abständen (D) zueinander an der Statoreinheit (300) angeordnet sind, wobei am Läufer (400) eine Mehrzahl von zueinander beabstandeten Schleifkontakten (439) ausgebildet ist, und wobei der vordefinierte Abstand (D) derart definiert ist, dass in einer Mehrzahl von Ladepositionen des Läufers (400) auf der Statoreinheit (300) eine Kontaktierung zwischen wenigstens einem Kontaktierungselement (337) der Statoreinheit (300 und einem Schleifkontakt (439) des Läufers (400) bewirkbar ist.

6. Planarantriebssystem (200) nach einem der voranstehenden Ansprüche, wobei über eine Variation einer Flughöhe (H) des Läufers (400) oberhalb der Statoroberfläche (303) die Kopplung zwischen der Übertragungseinheit (317) der Energieübertragungsstruktur (313) und der Übertragungsgegeneinheit (429) des Läufers (400) bewirkbar ist, und/oder wobei der Energiespeicher (419) durch einen Fixierungsmechanismus (433) am Läufer (400) lösbar fixiert ist, und wobei der Fixierungsmechanismus (433) eine Rastverbindung und/oder Steckverbindung umfasst.

7. Planarantriebssystem (200) nach einem der voranstehenden Ansprüche, wobei das Planarantriebssystem (200) ferner eine an der Statoreinheit (300) angeordnete Auslösestruktur (343) umfasst, wobei die Auslösestruktur (343) einen Aktivierungsvorsprung (345) und einen Aufnahmebereich (347) umfasst, wobei der Fixiermechanismus (433) ein Auslöseelement (471) umfasst, und wobei das Planarantriebssystem (100) eingerichtet ist, durch Ansteuern des Läufers (400) in eine Auswurfposition auf der Statoreinheit (300) das Auslöseelement (471) gegen den Aktivierungsvorsprung (345) zu drücken und hierdurch auszulösen, wobei durch Auslösen des Auslöseelements (471) der Energiespeicher (419) aus dem Fixiermechanismus (433) in den Aufnahmebereich (347) der Auslösestruktur (343) ausgeworfen wird, und/oder wobei der Läufer (400) und/oder der weitere Läufer (423) eine Prozessvorrichtung (427) umfasst, und wobei mit der Energie des Energiespeichers (419) die Prozessvorrichtung (427) antreibbar ist.

8. Planarantriebssystem (200) nach einem der voranstehenden Ansprüche, wobei der Energiespeicher (419) eine elektrische Batterieeinheit (443) und/oder einen Drucklufttank und/oder einen Gastank und/oder einen Kraftstofftank umfasst.

9. Planarantriebssystem (200) nach einem der voranstehenden Ansprüche, wobei der Läufer (400) ein mit dem Energiespeicher (419) verbundenes Energieübertragungselement (421) aufweist, wobei das Energieübertragungselement (421) mit einem Energieübertragungsgegenelement (425) eines weiteren Läufers (423) koppelbar ist, und wobei bei Kopplung des Energieübertragungselements (421) mit dem Energieübertragungsgegenelement (425) eine Energieübertragung vom Läufer (400) auf den weiteren Läufer (423) bewirkbar ist, und/oder wobei das Energieübertragungselement (421) des Läufers (400) und das Energieübertragungsgegenelement (425) des weiteren Läufers (423) jeweils als eine Steckverbindung mit einem Steckerelement und/oder einem Buchsenelement oder als eine Induktionsspule ausgebildet sind.

10. Läufer (400) für ein Planarantriebssystem (200) nach einem der voranstehenden Ansprüche 1 bis 9, wobei der Läufer (400) eine Mehrzahl von Magneteinheiten (410) zum Erzeugen eines Läufermagnetfelds, einen Energiespeicher (419) und eine Übertragungsgegeneinheit (429) umfasst, wobei der Energiespeicher (419) auf einer Oberseite (435) des Läufers (400) angeordnet oder in eine Umrandungsstruktur (455) des Läufers (400) integriert oder flächig auf einer Läuferbasis (477) des Läufers (400) ausgebildet ist und eine Oberseite (435) des Läufers (400) bildet, wobei der Läufer (400) optional zusätzlich ein Energieübertragungselement (421) umfasst.

11. Verfahren (100) zur Energieübertragung auf einen Läufer (400) in einem Planarantriebssystem (200) nach einem der voranstehenden Ansprüche 1 bis 9, wobei das Planarantriebssystem (200) eine Steuereinheit (201), eine Statoreinheit (300) und einen Läufer (400) umfasst, wobei an der Statoreinheit (300) eine Energieübertragungsstruktur (313) mit einer Übertragungseinheit (317) ausgebildet ist, wobei der Läufer (400) eine mit der Übertragungseinheit (317) koppelbare Übertragungsgegeneinheit (429) und einen Energiespeicher (419) umfasst, wobei der Energiespeicher (419) auf einer Oberseite (435) des Läufers (400) angeordnet oder in eine Umrandungsstruktur (455) des Läufers (400) integriert oder flächig auf einer Läuferbasis (477) des Läufers (400) ausgebildet ist und eine Oberseite (435) des Läufers (400) bildet, und wobei das Verfahren (100) umfasst:
Ausgeben von Steuersignalen durch die Steuereinheit (201) an wenigstens eine Spulengruppe der Statoreinheit (300) zum Positionieren des Läufers (400) in eine Energieladeposition relativ zur Energieübertragungsstruktur (313) in einem ersten Ausgabeschritt (101), wobei in der Energieladeposition eine Kopplung zwischen der Übertragungseinheit (317) der Energieübertragungsstruktur (313) und der Übertragungsgegeneinheit (429) des Läufers (400) und eine mit der Kopplung verbundene Energieübertragung von der Energieübertragungsstruktur (313) auf den Läufer (400) bewirkbar ist; und
Ausgeben von Steuersignalen durch die Steuereinheit (201) an die Energieübertragungsstruktur (313) zum Ausführen der Energieübertragung von der Energieübertragungsstruktur (313) auf den Läufer (400) in einem zweiten Ausgabeschritt (103).

12. Verfahren (100) nach Anspruch 11, wobei der erste Ausgabeschritt (101) umfasst: Ausgeben von Steuersignalen durch die Steuereinheit (201) an wenigstens eine Spulengruppe zum Variieren einer Flughöhe (H) des Läufers (400) in der Energieladeposition und zum Koppeln der Übertragungseinheit (317) der Energieübertragungsstruktur (313) und der Übertragungsgegeneinheit (429) des Läufers (400) in einem dritten Ausgabeschritt (105).

13. Verfahren (100) nach Anspruch 11 oder 12, ferner umfassend:
Ausgeben von Steuersignalen durch die Steuereinheit (201) an wenigstens eine Spulengruppe zum Steuern des Läufers (400) in eine Auswurfposition in einem vierten Ausgabeschritt (107), wobei in der Auswurfposition ein Auslöseelement (471) eines Fixiermechanismus (433), mittels dem der Energiespeicher (419) am Läufer (400) fixiert ist an einen Aktivierungsvorsprung (345) einer an der Statoreinheit (300) angeordneten Auslösestruktur (343) angrenzt und hierdurch ausgelöst wird, und wobei durch Auslösen des Auslöseelements (471) der Energiespeicher (419) aus dem Fixiermechanismus (433) ausgeworfen und von einem Aufnahmebereich (347) der Auslösestruktur (343) aufgenommen wird.

14. Verfahren (100) nach einem der voranstehenden Ansprüche 11 bis 13, wobei das Verfahren (100) ferner umfasst:
Ausgeben von Steuersignalen durch die Steuereinheit (201) an wenigstens eine Spulengruppe der Statoreinheit (300) zum Positionieren des Läufers (400) in eine Übertragungsposition relativ zum einem weiteren Läufer (423) des Planarantriebssystem (200) in einem fünften Ausgabeschritt (109), wobei in der Übertragungsposition eine Kopplung zwischen einem Energieübertragungselement (421) des Läufers (400) mit einem Energieübertragungsgegenelement (425) des weiteren Läufers (423) und eine Energieübertragung vom Läufer (400) an den weiteren Läufer (423) und/oder eine Energieübertragung vom weiteren Läufer (423) an den Läufer (400) bewirkbar ist; und
Ausführen der Energieübertragung vom Läufer (400) auf den weiteren Läufer (423) und/oder vom weiteren Läufer (423) an den Läufer (400) in einem Übertragungsschritt (111), und/oder wobei die Energieübertragung vom Läufer (400) auf den weiteren Läufer (423) oder vom weiteren Läufer (423) auf den Läufer (400) durch die Läufer (400, 423) oder die Steuereinheit (201) gesteuert wird.

15. Verfahren (100) nach einem der voranstehenden Ansprüche 11 bis 14, wobei die Steuereinheit (201) erkennt, dass der Läufer (400) und/oder der weitere Läufer (423) eine Energiemenge benötigt und eine Energieübertragung auszuführen ist, und/oder dass der Läufer (400) und/oder der weitere Läufer (423) in der Lage ist, eine entsprechende Energiemenge bereitzustellen, und/oder wobei der Läufer (400) und/oder der weitere Läufer (423) durch Aussenden einer entsprechenden Nachricht an die Steuereinheit (201) der Steuereinheit (201) signalisieren, dass eine Energiemenge benötigt wird und eine Energieübertragung auszuführen ist, und/oder wobei das Koppeln des Läufers (400) mit dem weiteren Läufer (400) und das Übertragen der Energie vom Läufer (400) auf den weiteren Läufer (400) während eines Fahrens des Läufers (400) und des weiteren Läufers (400) erfolgt.

## Claims

1. Planar drive system (200), wherein the planar drive system (200) comprises a stator unit (300) having a plurality of coil groups (321) for generating a stator magnetic field and at least one rotor (400) having a plurality of magnet units (410) for generating a rotor magnetic field, wherein the rotor (400) can be driven on the stator unit (300) via a magnetic coupling between the stator magnetic field and the rotor magnetic field, wherein the rotor (400) has an energy accumulator (419), wherein an energy transfer structure (313) with a transfer unit (317) is formed on the stator unit (300), wherein the rotor (400) comprises a transfer counter-unit (429) which can be coupled to the transfer unit (317), and wherein, when coupling the transfer unit (317) to the transfer counter-unit (429), an energy transfer can be effected from the energy transfer structure (313) to the rotor (400), wherein the energy accumulator (419) is arranged on a top surface (435) of the rotor (400) or integrated into an edge structure (455) of the rotor (400) or formed flatly on a rotor base (477) of the rotor (400) and forms a top surface (435) of the rotor (400).

2. Planar drive system (200) according to Claim 1, wherein the energy transfer structure (313) has a contacting arm (353), wherein the transfer unit (317) is formed on the contacting arm (353), and wherein the contacting arm (353) is arranged at least partially over a stator surface (303) of the stator unit (300).

3. Planar drive system (200) according to Claim 1 or 2, wherein the transfer counter-unit (429) is formed laterally and/or on a lower side (437) facing the stator surface (303) and/or on an upper side (435) of the rotor (400) lying opposite the lower side (437), and/or wherein the transfer unit (317) and the transfer counter-unit (429) comprise induction coils (331, 447).

4. Planar drive system (200) according to any one of the preceding claims, wherein the transfer unit (317) and the transfer counter-unit (429) each comprise an induction layer (333, 449), wherein the transfer unit (317) is arranged on the stator surface (303) of the stator unit (300), and wherein the transfer counter-unit (429) is formed on a lower side (437) of the rotor (400) facing the stator surface (303), and/or wherein the transfer unit (317) comprises a busbar (323), wherein the transfer counter-unit (429) comprises a rubbing contact (439).

5. Planar drive system (200) according to Claim 6, wherein the busbar (323) is formed in a stator surface (303) of the stator unit (300), and wherein the rubbing contact (439) is formed on a lower side of the rotor (400) facing the stator surface (303), and/or wherein the busbar (323) comprises a plurality of contacting elements (337), wherein the contacting elements (337) are arranged at predetermined spacings (D) from each other on the stator unit (300), wherein a plurality of mutually spaced-apart rubbing contacts (439) are formed on the rotor (400), and wherein the predefined spacing (D) is defined in such a way that, in a plurality of charge positions of the rotor (400) on the stator unit (300), a contact between at least one contacting element (337) of the stator unit (300) and a rubbing contact (439) of the rotor (400) can be effected.

6. Planar drive system (200) according to any one of the preceding claims, wherein the coupling between the transfer unit (317) of the energy transfer structure (313) and the transfer counter-unit (429) of the rotor (400) is effected via a variation of a height clearance (H) of the rotor (400) above the stator surface (303), and/or wherein the energy accumulator (419) is fixed releasably on the rotor (400) by a fixing mechanism (433), and wherein the fixing mechanism (433) comprises a latching connection and/or plug-in connection.

7. Planar drive system (200) according to any one of the preceding claims, wherein the planar drive system (200) further comprises a trigger structure (343) arranged on the stator unit (300), wherein the trigger structure (343) comprises an activation projection (345) and a receiving region (347), wherein the fixing mechanism (433) comprises a trigger element (471), and wherein the planar drive system (100) is configured, by actuating the rotor (400) into an ejection position on the stator unit (300), to press the trigger element (471) against the activation projection (345) and to thereby trigger it, wherein the energy accumulator (419) is ejected from the fixing mechanism (433) into the receiving area (347) of the trigger structure (343) by triggering the trigger element (471), and/or wherein the rotor (400) and/or the further rotor (423) comprise/comprises a process apparatus (427), and wherein the process apparatus (427) can be driven with the energy of the energy accumulator (419).

8. Planar drive system (200) according to any one of the preceding claims, wherein the energy accumulator (419) comprises an electric battery unit (443) and/or a compressed air tank and/or a gas tank and/or a fuel tank.

9. Planar drive system (200) according to any one of the preceding claims, wherein the rotor (400) has an energy transfer element (421) connected to the energy accumulator (419), wherein the energy transfer element (421) can be coupled to an energy transfer counter-element (425) of a further rotor (423), and wherein, when coupling the energy transfer element (421) to the energy transfer counter-element (425), an energy transfer is effected from the rotor (400) to the further rotor (423), and/or wherein the energy transfer element (421) of the rotor (400) and the energy transfer counter-element (425) of the further rotor (423) are each formed as a plug-in connection with a plug element and/or a socket element or as an induction coil.

10. Rotor (400) for a planar drive system (200) according to any one of the preceding Claims 1 to 9, wherein the rotor (400) comprises a plurality of magnet units (410) for generating a rotor magnetic field, an energy accumulator (419) and a transfer counter-unit (429), wherein the energy accumulator (419) is arranged on a top surface (435) of the rotor (400) or integrated into an edge structure (455) of the rotor (400) or formed flatly on a rotor base (477) of the rotor (400) and forms a top surface (435) of the rotor (400), wherein the rotor (400) optionally additionally comprises an energy transfer element (421).

11. Method (100) for transferring energy to a rotor (400) in a planar drive system (200) according to any one of the preceding Claims 1 to 9, wherein the planar drive system (200) comprises a control unit (201), a stator unit (300) and a rotor (400), wherein an energy transfer structure (313) with a transfer unit (317) is formed on the stator unit (300), wherein the rotor (400) comprises a transfer counter-unit (429), which can be coupled to the transfer unit (317), and an energy accumulator (419), wherein the energy accumulator (419) is arranged on a top surface (435) of the rotor (400) or integrated into an edge structure (455) of the rotor (400) or formed flatly on a rotor base (477) of the rotor (400) and forms a top surface (435) of the rotor (400), and wherein the method (100) comprises:
outputting control signals by the control unit (201) to at least one coil group of the stator unit (300) for positioning the rotor (400) into an energy charge position relative to the energy transfer structure (313) in a first output step (101), wherein, in the energy charge position, a coupling between the transfer unit (317) of the energy transfer structure (313) and the transfer counter-unit (429) of the rotor (400) and an energy transfer, connected to the coupling, from the energy transfer structure (313) to the rotor (400) can be effected; and
outputting control signals by the control unit (201) to the energy transfer structure (313) in order to carry out the energy transfer from the energy transfer structure (313) to the rotor (400) in a second output step (103).

12. Method (100) according to Claim 11, wherein the first output step (101) comprises:
outputting control signals by the control unit (201) to at least one coil group for varying a height clearance (H) of the rotor (400) in the energy charge position and for coupling the transfer unit (317) of the energy transfer structure (313) and the transfer counter-unit (429) of the rotor (400) in a third output step (105).

13. Method (100) according to Claim 11 or 12, further comprising:
outputting control signals by the control unit (201) to at least one coil group for controlling the rotor (400) into an ejection position in a fourth output step (107), wherein, in the ejection position, a trigger element (471) of a fixing mechanism (433), using which the energy accumulator (419) is fixed to the rotor (400), is adjacent to an activation projection (345) of a trigger structure (343) arranged on the stator unit (300) and is thereby triggered, and wherein, by triggering the trigger element (471), the energy accumulator (419) is ejected from the fixing mechanism (433) and received by a receiving region (347) of the trigger structure (343).

14. Method (100) according to any one of the preceding Claims 11 to 13, wherein the method (100) further comprises:
outputting control signals by the control unit (201) to at least one coil group of the stator unit (300) for positioning the rotor (400) into a transfer position relative to a further rotor (423) of the planar drive system (200) in a fifth output step (109), wherein, in the transfer position, a coupling between an energy transfer element (421) of the rotor (400) to an energy transfer counter-element (425) of the further rotor (423) and an energy transfer from the rotor (400) to the further rotor (423) and/or an energy transfer from the further rotor (423) to the rotor (400) can be effected; and
performing the energy transfer from the rotor (400) to the further rotor (423) and/or from the further rotor (423) to the rotor (400) in a transfer step (111), and/or wherein the energy transfer from the rotor (400) to the further rotor (423) or from the further rotor (423) to the rotor (400) is controlled by the rotors (400, 423) or the control unit (201).

15. Method (100) according to any one of the preceding Claims 11 to 14, wherein the control unit (201) recognizes that the rotor (400) and/or the further rotor (423) require/requires a quantity of energy and an energy transfer is to be performed, and/or that the rotor (400) and/or the further rotor (423) are/is able to provide a corresponding quantity of energy, and/or wherein the rotor (400) and/or the further rotor (423) signal/signals to the control unit (201), by sending a corresponding message to the control unit (201), that a quantity of energy is required and an energy transfer is to be performed, and/or wherein the coupling of the rotor (400) to the further rotor (400) and the transfer of the energy from the rotor (400) to the further rotor (400) takes place during a movement of the rotor (400) and the further rotor (400).

## Revendications

1. Système d'entraînement plan (200), le système d'entraînement plan (200) comprenant une unité de stator (300), qui comporte une pluralité de groupes de bobines (321) pour générer un champ magnétique de stator, et au moins un rotor (400), qui comporte une pluralité d'unités d'aimant (410) pour générer un champ magnétique de rotor, le rotor (400) pouvant être entraîné sur l'unité de stator (300) par le biais d'un couplage magnétique entre le champ magnétique de stator et le champ magnétique de rotor, le rotor (400) comportant un accumulateur d'énergie (419), une structure de transmission d'énergie (313) comportant une unité de transmission (317) étant réalisée sur l'unité de stator (300), le rotor (400) comprenant une contre-unité de transmission (429) qui peut être couplée à l'unité de transmission (317), et une transmission d'énergie de la structure de transmission d'énergie (313) au rotor (400) pouvant être effectuée lorsque l'unité de transmission (317) est couplée à l'unité de contre-unité de transmission (429), l'accumulateur d'énergie (419) étant disposé sur une face supérieure (435) du rotor (400) ou étant intégré dans une structure de bordure (455) du rotor (400) ou étant réalisé de manière plane sur une base de rotor (477) du rotor (400) et formant une face supérieure (435) du rotor (400).

2. Système d'entraînement plan (200) selon la revendication 1, dans lequel la structure de transmission d'énergie (313) comporte un bras de contact (353), l'unité de transmission (317) étant réalisée sur le bras de contact (353) et le bras de contact (353) étant disposé au moins partiellement au-dessus d'une surface de stator (303) de l'unité de stator (300).

3. Système d'entraînement plan (200) selon la revendication 1 ou 2, dans lequel la contre-unité de transmission (429) est réalisée latéralement et/ou sur une face inférieure (437) qui est tournée vers la surface de stator (303) et/ou sur une face supérieure (435) du rotor (400) qui est opposée à la face inférieure (437), et/ou dans lequel l'unité de transmission (317) et la contre-unité de transmission (429) comprennent des bobines d'induction (331, 447).

4. Système d'entraînement plan (200) selon l'une quelconque des revendications précédentes, dans lequel l'unité de transmission (317) et la contre-unité de transmission (429) comprennent respectivement une couche d'induction (333, 449), l'unité de transmission (317) étant disposée sur la surface de stator (303) de l'unité de stator (300), la contre-unité de transmission (429) étant réalisée sur une face inférieure (437) du rotor (400) qui est tournée vers la surface du stator (303), et/ou l'unité de transmission (317) comprenant une barre omnibus (323), la contre-unité de transmission (429) comprenant un contact glissant (439).

5. Système d'entraînement plan (200) selon la revendication 6, dans lequel la barre omnibus (323) est réalisée dans une surface de stator (303) de l'unité de stator (300), et dans lequel le contact glissant (439) est réalisé sur une face inférieure du rotor (400) qui est tournée vers la surface de stator (303), et/ou dans lequel la barre omnibus (323) comprend une pluralité d'éléments de contact (337), les éléments de contact (337) étant disposés à des distances prédéterminées (D) les uns des autres sur l'unité de stator (300), une pluralité de contacts glissants (439) espacés les uns des autres étant réalisés sur le rotor (400), et la distance prédéfinie (D) étant définie de telle sorte qu'un contact peut être établi entre au moins un élément de contact (337) de l'unité de stator (300) et un contact glissant (439) du rotor (400) en une pluralité de positions de charge du rotor (400) sur l'unité de stator (300).

6. Système d'entraînement plan (200) selon l'une quelconque des revendications précédentes, dans lequel le couplage entre l'unité de transmission (317) de la structure de transmission d'énergie (400) et la contre-unité de transmission (429) du rotor (313) peut être réalisé par le biais d'une variation d'une hauteur de vol (H) du rotor (400) au-dessus de la surface de stator (303), et/ou l'accumulateur d'énergie (419) étant fixé de manière amovible au rotor (400) par un mécanisme de fixation (433), et le mécanisme de fixation (433) comprenant une liaison par encliquetage et/ou une liaison par enfichage.

7. Système d'entraînement plan (200) selon l'une quelconque des revendications précédentes, dans lequel le système d'entraînement plan (200) comprend en outre une structure de déclenchement (343) disposée sur l'unité de stator (300), la structure de déclenchement (343) comprenant une partie saillante d'activation (345) et une zone de réception (347), le mécanisme de fixation (433) comprenant un élément de déclenchement (471), et le système d'entraînement plan (100) étant conçu pour comprimer l'élément déclencheur (471) contre la partie saillante d'activation (345) et ainsi le déclencher en commandant le rotor (400) pour le faire passer dans une position d'éjection sur l'unité de stator (300), l'accumulateur d'énergie (419) étant éjecté du mécanisme de fixation (433) dans la zone de réception (347) de la structure de déclenchement (343) par déclenchement de l'élément déclencheur (471), et/ou le rotor (400) et/ou l'autre rotor (423) comprenant un dispositif de traitement (427), et le dispositif de traitement (427) pouvant être entraîné au moyen de l'énergie de l'accumulateur d'énergie (419).

8. Système d'entraînement plan (200) selon l'une quelconque des revendications précédentes, dans lequel l'accumulateur d'énergie (419) comprend une unité de batterie électrique (443) et/ou un réservoir d'air comprimé et/ou un réservoir de gaz et/ou un réservoir de carburant.

9. Système d'entraînement plan (200) selon l'une quelconque des revendications précédentes, dans lequel le rotor (400) comporte un élément de transmission d'énergie (421) relié à l'accumulateur d'énergie (419), l'élément de transmission d'énergie (421) pouvant être couplé à un contre-élément de transmission d'énergie (425) d'un autre rotor (423), et lorsque l'élément de transmission d'énergie (421) est couplé au contre-élément de transmission d'énergie (425), une transmission d'énergie du rotor (400) à l'autre rotor (423) peut être effectuée, et/ou l'élément de transmission d'énergie (421) du rotor (400) et le contre-élément de transmission d'énergie (425) de l'autre rotor (423) sont respectivement réalisés sous forme de liaison enfichable avec un élément enfichable et/ou un élément femelle ou sous forme de bobine d'induction.

10. Rotor (400) pour un système d'entraînement plan (200) selon l'une quelconque des revendications 1 à 9 précédentes, le rotor (400) comprenant une pluralité d'unités magnétiques (410) pour générer un champ magnétique de rotor, un accumulateur d'énergie (419) et une contre-unité de transmission (429), l'accumulateur d'énergie (419) étant disposé sur une face supérieure (435) du rotor (400) ou étant intégré dans une structure de bordure (455) du rotor (400) ou étant réalisé de manière plane sur une base de rotor (477) du rotor (400) et formant une face supérieure (435) du rotor (400), le rotor (400) comportant éventuellement en outre un élément de transmission d'énergie (421).

11. Procédé (100) de transmission d'énergie à un rotor (400) dans un système d'entraînement plan (200) selon l'une quelconque des revendications 1 à 9 précédentes, le système d'entraînement plan (200) comprenant une unité de commande (201), une unité de stator (300) et un rotor (400), une structure de transmission d'énergie (313), qui comporte une unité de transmission (317) étant réalisée sur l'unité de stator (300), le rotor (400) comprenant une contre-unité de transmission (429) pouvant être couplée à l'unité de transmission (317) et un accumulateur d'énergie (419), l'accumulateur d'énergie (419) étant disposé sur une face supérieure (435) du rotor (400) ou étant intégré dans une structure de bordure (455) du rotor (400) ou étant réalisé de manière plane sur une base de rotor (477) du rotor (400) et formant une face supérieure (435) du rotor (400), et le procédé (100) comprenant :
l'émission par l'unité de commande (201) de signaux de commande à destination d'au moins un groupe de bobines de l'unité de stator (300) pour positionner le rotor (400) dans une position de charge d'énergie par rapport à la structure de transmission d'énergie (313) lors d'une première étape d'émission (101), un couplage entre l'unité de transmission (317) de la structure de transmission d'énergie (313) et la contre-unité de transmission (429) du rotor (400) et une transmission d'énergie reliée au couplage de la structure de transmission d'énergie (313) au rotor (400) pouvant être réalisés dans la position de charge d'énergie ; et
l'émission par l'unité de commande (201) de signaux de commande à destination de la structure de transmission d'énergie (313) pour effectuer la transmission d'énergie de la structure de transmission d'énergie (313) au rotor (400) lors d'une deuxième étape d'émission (103).

12. Procédé (100) selon la revendication 11, dans lequel la première étape d'émission (101) comprend :
l'émission par l'unité de commande (201) de signaux de commande à destination d'au moins un groupe de bobines pour faire varier une hauteur (H) du rotor (400) dans la position de charge d'énergie et pour coupler l'unité de transmission (317) à la structure de transmission d'énergie (313) et à la contre-unité de transmission (429) du rotor (400) lors d'une troisième étape d'émission (105).

13. Procédé (100) selon la revendication 11 ou 12, comprenant en outre :
l'émission par l'unité de commande (201) de signaux de commande à destination d'au moins un groupe de bobines pour commander le rotor (400) afin de le faire passer dans une position d'éjection lors d'une quatrième étape d'émission (107), dans lequel, dans la position d'éjection, un élément de déclenchement (471) d'un mécanisme de fixation (433), au moyen duquel l'accumulateur d'énergie (419) est fixé au rotor (400), vient en position adjacente à une partie saillante d'activation (345) d'une structure de déclenchement (343) disposée sur l'unité de stator (300) et est ainsi déclenché, et dans lequel, par le déclenchement de l'élément de déclenchement (471), l'accumulateur d'énergie (419) est éjecté du mécanisme de fixation (433) et est reçu par une zone de réception (347) de la structure de déclenchement (343).

14. Procédé (100) selon l'une des revendications 11 à 13 précédentes, le procédé (100) comprenant en outre :
l'émission par l'unité de commande (201) de signaux de commande à destination d'au moins un groupe de bobines de l'unité de stator (300) pour positionner le rotor (400) dans une position de transmission par rapport à un autre rotor (423) du système d'entraînement plan (200) lors d'une cinquième étape d'émission (109), un couplage entre un élément de transmission d'énergie (421) du rotor (400) et un contre-élément de transmission d'énergie (425) de l'autre rotor (423) et une transmission d'énergie du rotor (400) à l'autre rotor (423) et/ou une transmission d'énergie de l'autre rotor (423) au rotor (400) pouvant être effectués dans la position de transmission ; et
l'exécution de la transmission d'énergie du rotor (400) à l'autre rotor (423) et/ou de l'autre rotor (423) au rotor (400) lors d'une étape de transmission (111), et/ou la transmission d'énergie du rotor (400) à l'autre rotor (423) ou de l'autre rotor (423) au rotor (400) étant commandée par les rotors (400, 423) ou par l'unité de commande (201).

15. Procédé (100) selon l'une quelconque des revendications 11 à 14 précédentes, dans lequel l'unité de commande (201) détecte que le rotor (400) et/ou l'autre rotor (423) nécessite une certaine quantité d'énergie et doit effectuer une transmission d'énergie, et/ou que le rotor (400) et/ou l'autre rotor (423) peut fournir une quantité d'énergie correspondante, et/ou dans lequel le rotor (400) et/ou l'autre rotor (423) signalent à l'unité de commande (201), par envoi d'un message correspondant à l'unité de commande (201), qu'une certaine quantité d'énergie est nécessaire et qu'une transmission d'énergie doit être effectuée, et/ou dans lequel le couplage du rotor (400) à l'autre rotor (400) et la transmission de l'énergie du rotor (400) à l'autre rotor (400) ont lieu pendant un déplacement du rotor (400) et de l'autre rotor (400).
